# EUROPEAN PATENT SPECIFICATION

(11) **EP 3 629 674 B1**
(45) Date of publication and mention of the grant of the patent: **30.12.2020**
(21) Application number: 19205329.6
(22) Date of filing: 18.11.2015
(51) Int. Cl.: H04W 88/02, H04W 4/12, G06F 3/048, G06F 3/0484, G06F 3/0488, G06F 3/0486, G06F 3/0481

(54) **MOBILE TERMINAL AND CONTROL METHOD THEREFOR**
MOBILES ENDGERÄT UND STEUERUNGSVERFAHREN DAFÜR
TERMINAL MOBILE ET SON PROCÉDÉ DE COMMANDE

(30) Priority: 08.12.2014 KR 20140175055
(43) Date of publication of application: 01.04.2020
(62) Document number(s) of the earlier application(s) in accordance with Art. 76 EPC: 15867782.3 / 3 232 731
(73) Proprietor: LG Electronics Inc., SEOUL, 07336 (KR)
(72) Inventor: OH, Sesook, 06772 Seoul (KR); SEO, Kyunghye, 06772 Seoul (KR); KANG, Sungjin, 06772 Seoul (KR)
(74) Representative: Vossius & Partner Patentanwälte Rechtsanwälte mbB

(56) References cited:
- EP-A1- 2 571 234
- EP-A2- 2 306 307
- US-A1- 2006 146 765
- US-A1- 2010 262 673
- US-A1- 2013 201 123
- US-A1- 2014 320 425

## Description

### TECHNICAL FIELD

The present invention relates to a mobile terminal capable of easily interacting with content of a different mobile terminal and a method therefor.

### BACKGROUND ART

Generally, terminals can be classified into mobile/portable terminals and stationary terminals according to a presence or non-presence of mobility. And, the mobile terminals can be further classified into handheld terminals and vehicle mounted terminals according to availability for hand-carry.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

As the functions of the terminals are diversified, for example, the terminals are implemented in a form of a multimedia player equipped with complex functions such as capturing pictures or videos, playing music and video files, gaming, receiving broadcasting, and the like.

As functions of mobile terminals are diversified, communication between the mobile terminals has become a daily life. A mobile terminal transceive contents with another mobile terminal to share the contents with each other.

However, in order for the mobile terminal use contents stored in another mobile terminal, the mobile terminal should perform the steps of receiving the contents from another mobile terminal and selecting/executing the contents. Yet, when the mobile terminal receives the contents from another mobile terminal, since the received contents and contents previously stored in the mobile terminal are outputted in a manner of being mixed, it is not easy to find out the contents received from another mobile terminal.

US 2014/320425 A1 shows a touch screen device which is able to transfer files (e.g. images) in a wireless way to another portable device by dragging gestures. EP 2 571 234 A1 shows the communication between devices where the display can switch between landscape and portrait viewing modes.

Hence, the present invention proposes a mobile terminal capable of easily using contents stored in another mobile terminal and a method therefor.

### DISCLOSURE OF THE INVENTION

The invention is defined in the independent claims 1 and 13. The dependent claims 2-12-define some detailed embodiments.

### DESCRIPTION OF DRAWINGS

FIG. 1a is a block diagram for explaining a mobile terminal according to the present invention;
FIGS. 1b and 1c are conceptual diagrams for an example of a mobile terminal according to the present invention seen from a different view;
FIG. 2 is a flowchart for a method of sharing data between mobile terminals according to one embodiment of the present invention;
FIG. 3 is a diagram for an example of outputting a first indicator;
FIG. 4 is a diagram for an example of outputting an image data received from a first terminal;
FIGS. 5 to 7 are diagrams for an example of outputting a plurality of pages capable of being outputted in a first terminal through a first area;
FIG. 8 is a diagram for an example of outputting more items of a prescribed list according to the increase of a size of a first area;
FIG. 9 is a diagram for explaining arrangement of a first area and a second area;
FIG. 10 is a diagram for an example of differently arranging a first area and a second area according to an orientation of a second terminal;
FIG. 11 is a diagram for an example of controlling a size of a first area according to a change of an orientation of a second terminal;
FIG. 12 is a diagram for an example of outputting a second indicator;
FIG. 13 is a diagram for an example of outputting a content list;
FIG. 14 is a diagram for a different example of outputting a content list;
FIG. 15 is a diagram for an example of outputting a content list of a first terminal and a content list of a second terminal at the same time;
FIG. 16 is a diagram for an example of outputting content lists including identification information on each terminal;
FIG. 17 is a diagram for an example of executing an item of a content list through a specific application of a second terminal;
FIG. 18 is a diagram for an example of attaching contents to a message through a first area;
FIG. 19 is a diagram for an example of attaching contents to a message through a second area;
FIG. 20 is a diagram for an example of attaching an edited image to a message via a first area or a second area;
FIG. 21 is a diagram for an example of copying a task currently performed in a terminal to another terminal;
FIG. 22 is a diagram for a different example of copying a task currently performed in a terminal to another terminal.

### BEST MODE

### MODE FOR INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, slate PCs, tablet PCs, ultra-books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, digital signage, and the like.

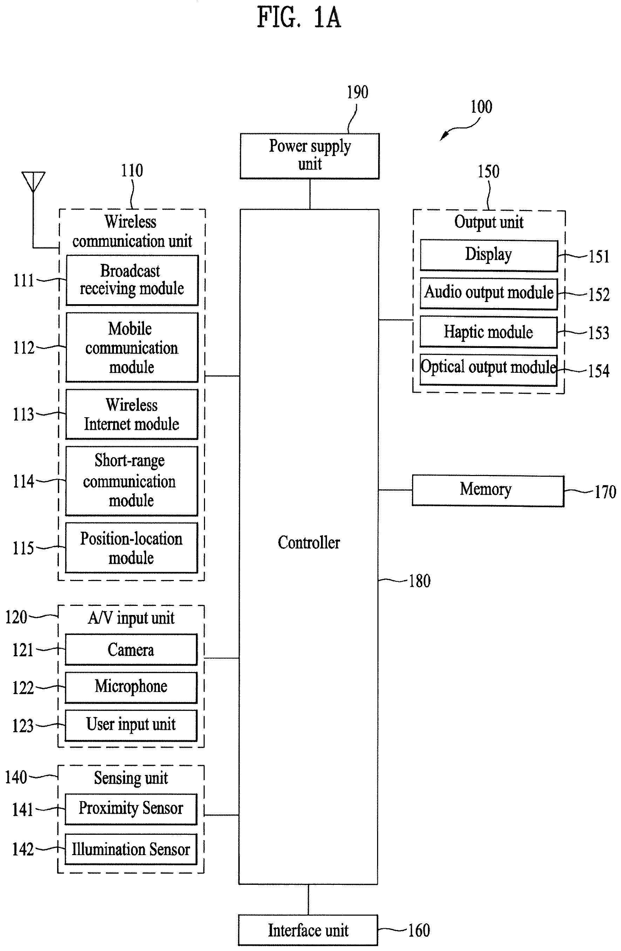

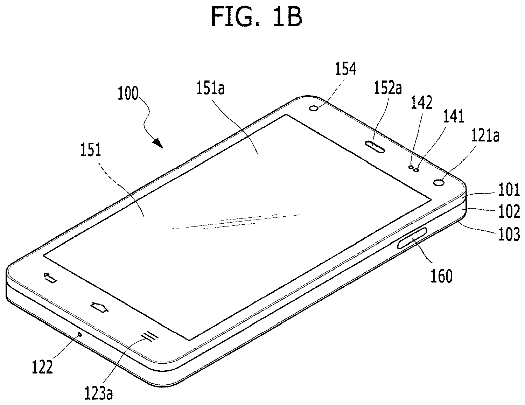

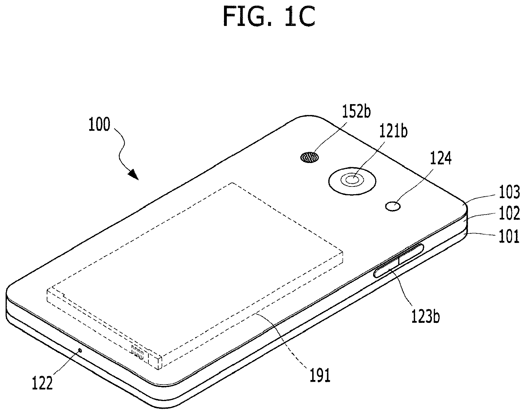

Referring to FIGS. 1a to 1c, FIG. 1a is a block diagram for explaining a mobile terminal according to the present invention and FIGS. 1b and 1c are conceptual diagrams for an example of a mobile terminal according to the present invention seen from a different view.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the components shown in FIG. 1a is not a requirement, and that greater or fewer components may alternatively be implemented.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes at least one selected from the group consisting of a broadcast receiving module 111, a mobile communication module 112, a wireless Internet module 113, a short-range communication module 114, and a location information module 115.

The input unit 120 includes a camera 121 or an image input unit for inputting an image signal, a microphone 122 or an audio input unit for inputting an audio signal, and a user input unit 123 (for example, a touch key, a push key, , and the like) for allowing a user to input information. Audio data or image data obtained by the input unit 120 is analyzed and can be processed by a control command of a user.

The sensing unit 140 is typically implemented using one or more sensors configured to sense at least one selected from the group consisting of internal information of the mobile terminal, the surrounding environment of the mobile terminal, user information, and the like. For example, the sensing unit 140 can include at least one selected from the group consisting of a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor), and a chemical sensor (for example, an electronic nose, a health care sensor, a biometric sensor, and the like). The mobile terminal 100 can be configured to utilize information obtained from two or more sensors by combining the information.

The output unit 150 is typically configured to output various types of information, such as audio, video, tactile output, and the like. The output unit 150 can include at least one selected from the group consisting of a display unit 151, an audio output module 152, a haptic module 153, and an optical output module 154. The display unit 151 may have an inter-layered structure or an integrated structure with a touch sensor to form a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled with the mobile terminal 100. The interface unit 160 can include at least one selected from the group consisting of wired or wireless ports, external power supply ports, wired or wireless data ports, memory card ports, ports for connecting a device equipped with an identification module, audio input/output (I/O) ports, video I/O ports, and earphone ports. In some cases, the mobile terminal 100 may perform assorted control functions associated with a connected external device, in response to the external device being connected to the interface unit 160.

The memory 170 is typically implemented to store data to support various functions of the mobile terminal 100. For instance, the memory 170 can be configured to store application programs executed in the mobile terminal 100, data or instructions for operations of the mobile terminal 100, and the like. Some of these application programs may be downloaded from an external server via wireless communication. Other application programs may be installed in the mobile terminal 100 at time of manufacturing the mobile terminal 100 for a basic function (for example, receiving a call, placing a call, receiving a message, sending a message, and the like). It is common for application programs to be stored in the memory 170, installed in the mobile terminal 100, and executed by the controller 180 to perform an operation (or function) of the mobile terminal 100.

The controller 180 controls overall operation of the mobile terminal 100, in addition to the operations associated with the application programs. The controller 180 processes a signal, data, information and the like inputted or outputted via the aforementioned configuration elements or executes an application program stored in the memory 170 to provide or process information or functions appropriate for a user.

In order to execute the applications programs stored in the memory 170, the controller 180 can control at least a part of the configurations elements mentioned earlier in FIG. 1a. Moreover, in order to execute the application programs, the controller 180 can operate at least two or more configuration elements included in the mobile terminal 100 by combining the configuration elements.

The power supply unit 190 receives external power or internal power under the control of the controller 180 to supply power to each of the configuration elements included in the mobile terminal 100. The power supply unit 190 may include a battery, and the battery may be configured to be embedded in the terminal body, or configured to be detachable from the terminal body.

At least a part of the configuration elements can operate in a manner of cooperating with each other to implement an operation of a mobile terminal, control of the mobile terminal or a method of controlling the mobile terminal according to various embodiments described in the following. And, the operation of the mobile terminal, the control of the mobile terminal or the method of controlling the mobile terminal can be implemented on the mobile terminal by driving at least one or more application programs stored in the memory 170.

The present invention provides a method for a mobile terminal to receive contents from another mobile terminal based on wireless communication between the mobile terminals. For example, a mobile terminal can mirror the output of another mobile terminal and may be able to receive contents from another mobile terminal using a content list stored in another mobile terminal. In the following example, the mobile terminals interacting with each other are referred to as a first terminal and a second terminal, respectively. Moreover, assume that the first terminal and the second terminal correspond to a smartphone and a tablet PC, respectively, in the following drawing, by which the present invention may be non-limited.

Basically, it may assume that the first terminal and the second terminal include at least one or more configuration elements shown in FIGS. 1a to 1c. Specifically, the first and the second terminal can commonly include the wireless communication unit 110, the display unit 151, the memory 170, and the controller 180 among the configuration elements shown in FIGS. 1a to 1c, by which the present invention may be non-limited. If necessary, the first and the second terminal can further include a part of the configuration elements shown in FIGS. 1a to 1c.

In order to clearly indicate the configuration elements commonly included in the first and the second terminal, such a prefix as 'first' is attached to the configuration element of the first terminal and such a prefix as 'second' is attached to the configuration element of the first terminal. And, in order to easily distinguish overlapped terminologies from each other, such prefixes as 'first' and 'second' can be used.

Moreover, assume that a first display unit and a second display unit correspond to a touch screen capable of receiving a touch input. Hence, the first display unit and the second display unit can perform both an output device role for outputting information and an input device role for receiving a touch input.

In the following embodiment, examples of a touch input including a touch input, a long touch input (touching a point for more than prescribed time), a drag input, a flicking input, and the like are illustrated. In this case, the drag input may correspond to a state that a pointer touching a display unit moves in a prescribed direction and maintains the touch or a state that a pointer touching a display unit moves in a prescribed direction and releases the touch. In particular, when a first item is dragged to a second item, it may indicate a state that the first item is dragged on the second item or a state that the first item is dragged to the second item and then a pointer is released from the display unit.

In the following embodiment, although it is explained as a specific operation is performed in response to a specific touch input, a touch input for triggering the specific operation is not restricted by the explained touch input. For example, although a first operation is performed by a drag input, it is apparent that the first operation is capable of being performed by a different touch input. And, a touch input can be replaced with a gesture input, a push input for pushing a key, or the like.

In the following, a mobile terminal according to the present invention is explained in detail with reference to following drawings.

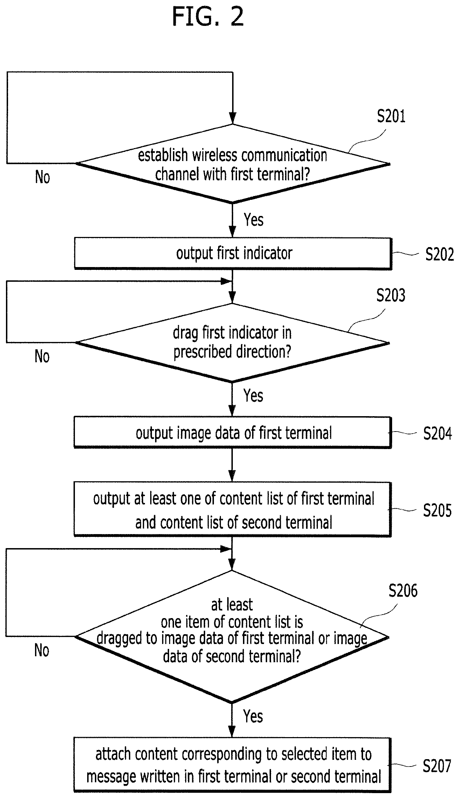

FIG. 2 is a flowchart for a method of sharing data between mobile terminals according to one embodiment of the present invention.

First of all, if a wireless communication channel is established between a first terminal and second terminal [S201], the second terminal can output a first indicator for outputting image data of the first terminal [S202]. In this case, it may use such a short-range mobile communication technology as Bluetooth, Wi-Fi Direct, and the like as a wireless communication scheme between the first terminal and the second terminal. Or, it may also use such a mobile communication technology as LTE, HSPDA, HSPA, and the like. A wireless communication scheme between the first terminal and the second terminal is not restricted by the aforementioned wireless communication schemes.

If a wireless channel is established between the first terminal and the second terminal, a second controller can output a first indicator for outputting image data of the first terminal via a second display unit. In this case, the first indicator may have a shape of an icon or an image object. If the first indicator has a shape of an image object, the image object can be located at the boundary of the second display unit.

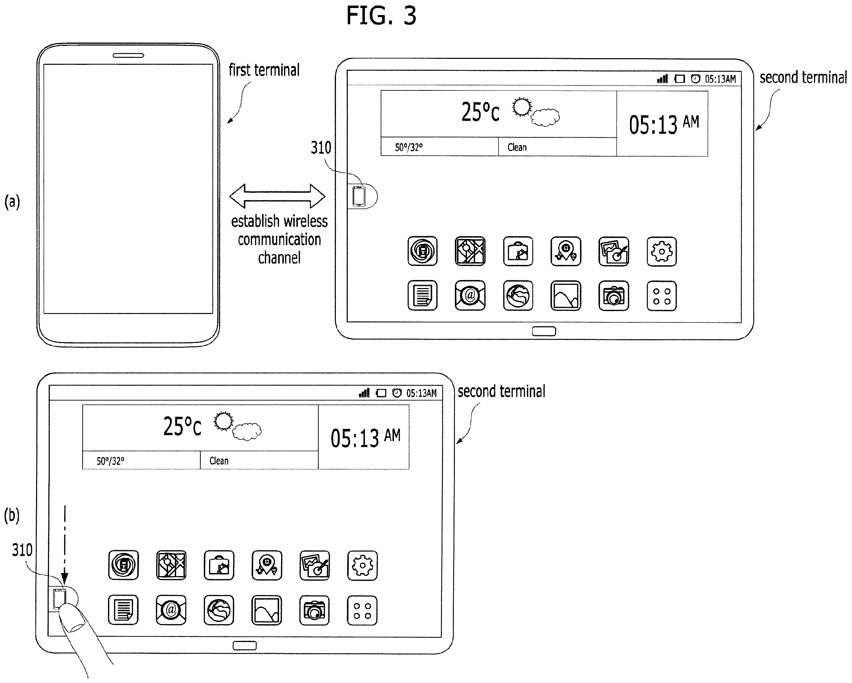

For example, FIG. 3 is a diagram for an example of outputting the first indicator. If a wireless communication channel is established between the first terminal and the second terminal, the second controller can control the first indicator 310 to be outputted via the second display unit. FIG. 3 (a) illustrates an example that an image object including a semicircle shape at one end is outputted at the left boundary of the second display unit.

As shown in the example of FIG. 3 (a), one end of the first indicator 310 may have a semicircle shape or a spiky shape. One end of the first indicator 310 can be used for guiding a drag moving direction of a pointer. For example, as shown in the example of FIG. 3 (a), if one end of a semicircle shape of the first indicator 310 is placed towards the right direction, it is able to guide that a first area is to be outputted only when a pointer touching the first indicator 310 is dragged to the right.

Although it is not depicted, if a size of the first area is magnified more than a prescribed value, one end of the first indicator 310 can be placed towards a direction opposite to an initial direction. In this case, if the point touching the first indicator 310 is dragged to the left, the size of the first area can be gradually decreased.

Identification information for identifying the first terminal can be outputted on the top of the first indicator 310. For example, referring to FIG. 3 (a), an image is outputted on the top of the first indicator 310 to indicate that the first terminal corresponds to a smartphone. If an image representing the first terminal is outputted on the top of the first indicator 310, it may be able to easily identify a type of a device connected with the second terminal. As shown in FIG. 3 (a), the identification information may have an image form or a text form.

A position of the first indicator 310 can be controlled by a user input. For example, if a pointer touching the first indicator 310 is dragged along with the boundary of the second display unit, the second controller can control the position of the first indicator 310 to be changed according to the pointer. For example, if the pointer touching the first indicator 310 is dragged to up direction, as shown in FIG. 3 (b), the second controller can control a position at which the first indicator 310 is displayed to be changed according to a moving path of the pointer.

As shown in FIG. 3 (b), if the pointer touching the first indicator 310 is dragged along with the boundary of the second display unit, a position at which the first indicator 310 is displayed can be changed to a position to which the pointer is dragged.

According to the aforementioned example, if a wireless communication channel is established between the first terminal and the second terminal, the second terminal can output the first indicator 310. In this case, the second controller can control the first indicator 310 only when a prescribed application for sharing data with the first terminal is executed. For example, if a prescribed application is executed after a wireless communication channel is established between the first terminal and the second terminal, or if a wireless communication channel is established between the first terminal and the second terminal after a prescribed application is executed, the second controller can control the first indicator 310 to be outputted via the first display unit.

If the pointer touching the first indicator is dragged in a prescribed direction [S203], the second controller can control image data received from the first terminal to be outputted via a partial area of the first display unit [S204]. In this case, a size of the area on which the image data is outputted can be controlled according to a displacement of the pointer, which has been dragged in a prescribed direction.

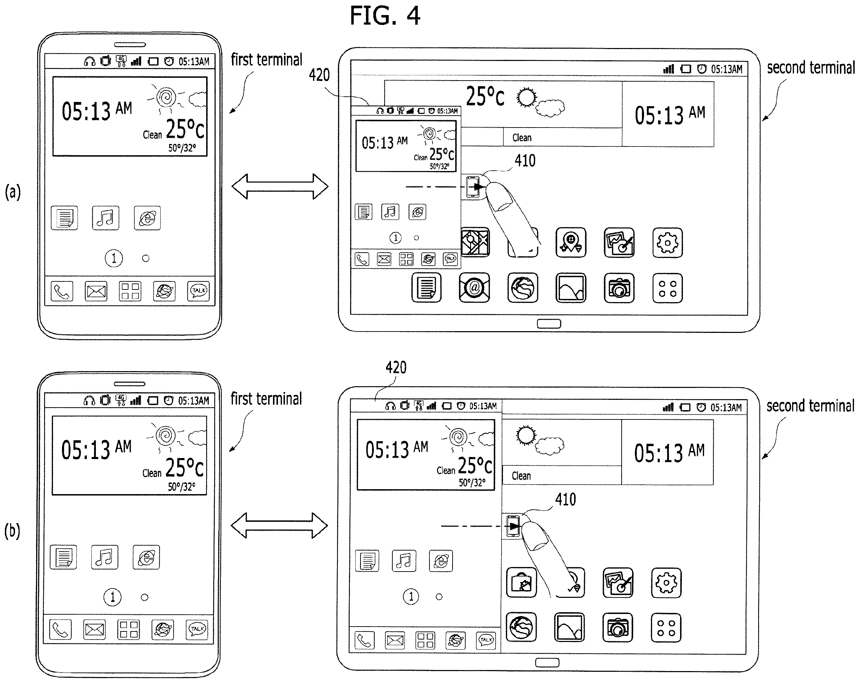

For example, FIG. 4 is a diagram for an example of outputting an image data received from a first terminal. If a pointer touching a first indicator 410 is dragged in a prescribed direction, as shown in FIG. 4 (a), the second controller can control image data received from the first terminal to be outputted. In this case, a size of a first area 420 on which the image data received from the first terminal is outputted can be controlled according to a displacement of the pointer, which has been dragged in a prescribed direction.

For example, as shown in FIG. 4 (a), if the pointer is dragged to the left/right, a width of the first area 420 can be determined in accordance with a horizontal axis displacement of the pointer. In particular, if the horizontal axis displacement of the pointer increases, as shown in FIG. 4 (b), the size of the first area 420 can gradually increase.

Although it is not depicted, if the pointer moves in up/down direction (e.g., if the first indicator is positioned at the top (or bottom) of the second display unit and the pointer touching the first indicator is dragged in down (or up) direction), a height of the first area can be determined in accordance with a vertical axis displacement of the pointer.

As a different example, if a displacement of the pointer is equal to or less than a predetermined value, the second controller outputs the first area with a predetermined size. If the displacement of the pointer becomes equal to or greater than the predetermined value, the second controller can control a horizontal length or a vertical length of the first area to be increased as much as a displacement increase amount of the pointer.

Image data received from the first terminal can be outputted via the first area. In this case, the image data received from the first terminal may correspond to a real time output image of the first terminal (i.e., image currently outputted by the first display unit) or an execution screen of a prescribed application installed in the first terminal. In this case, the prescribed application may correspond to an application lastly executed in the first terminal, an application most frequently executed in the first terminal, or an application stored by a user. Although the prescribed application is not outputted via the first display unit, the first terminal can transmit an image data, which is obtained by encoding an output screen of the prescribed application, to the second terminal.

As a further different example, the second controller can determine a type of image data to be outputted via the first area based on a type of a touch input touching the first indicator. For example, if a user input touching the first indicator is received, an execution screen of a prescribed application installed in the first terminal is outputted via the first area. If a pointer touching the first indicator is dragged or a pinch out input inputted by two pointers touching the first indicator is received, the second controller can control a real time output image of the first terminal to be outputted. In particular, if a touch input of a first type is received on the first indicator, the second controller can control an execution screen of a prescribed application installed in the first terminal to be outputted via the first area. If a touch input of a second type is received on the first indicator, the second controller can control a real time output screen of the first terminal to be outputted via the first area.

If the first area is magnified more than a prescribed size, the second controller can output image data for a plurality of pages.

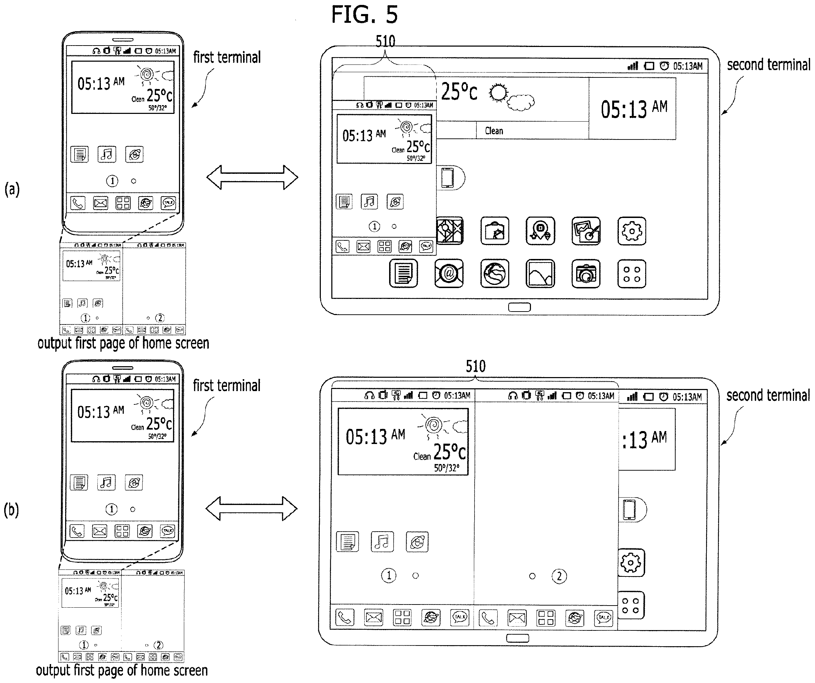

For example, FIGS. 5 to 7 are diagrams for an example of outputting a plurality of pages capable of being outputted in a first terminal through a first area.

If a displacement of the pointer touching the first indicator increases in a prescribed direction, the second controller can control a size of the first area outputting image data of the first terminal to be increased. In this case, if the size of the first area increases more than a prescribed size, the second controller can control a plurality of pages capable of being outputted in the first terminal to be outputted via the first area.

For example, FIG. 5 is a diagram for an example of outputting a plurality of pages of a home screen. When the home screen consists of a plurality of pages, the second controller can receive and output image data for a page currently outputted via the first display unit. If a size of the first area 510 becomes equal to or greater than a prescribed size, the second controller can further receive image data for a next page or a previous page of the page currently outputted via the first display unit as well as the page currently outputted via the first display unit. Hence, a plurality of pages of the home screen can be outputted at the same time via the first area 510.

Referring to FIGS. 5 (a) and (b), if the size of the first area 510 increases while a first page of the home screen is outputted, the first page and the second page of the home screen can be outputted at the same time.

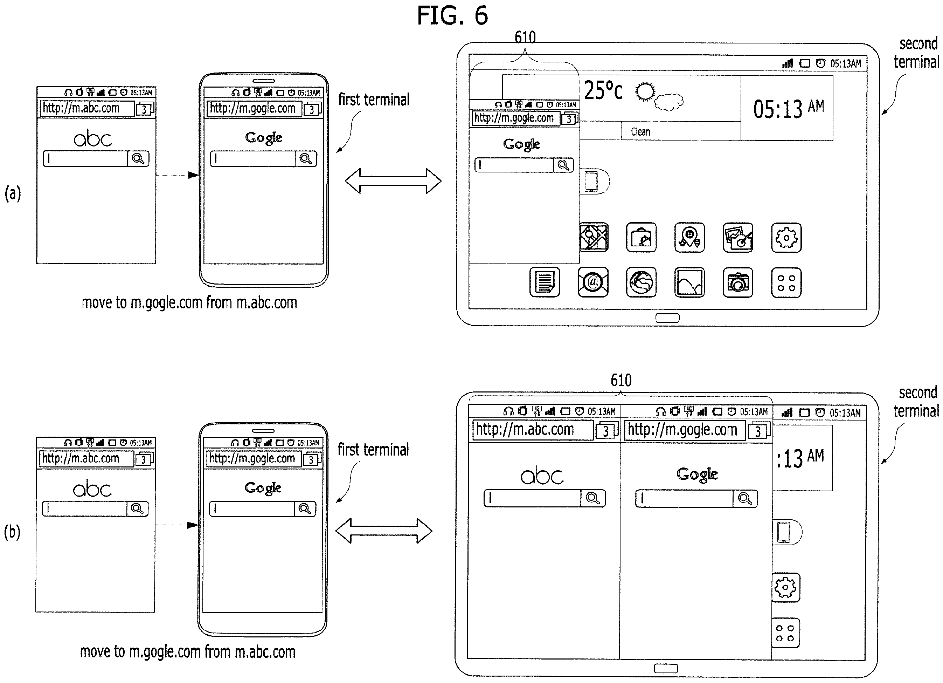

FIG. 6 is a diagram for an example of outputting a plurality of web pages. If a web browser is executed in the first terminal, the second terminal can receive and output image data for the web page currently outputted via the first display unit. If a size of the first area 610 becomes equal to or greater than a prescribed size, the second controller can further receive image data for a web page previously visited by the first terminal or a web page bookmarked by the first terminal as well as the page currently outputted via the first display unit. Hence, a plurality of web pages can be outputted at the same time via the first area 610.

Referring to FIGS. 6 (a) and (b), if the size of the first area 610 increases while a specific web page is outputted, two web pages can be outputted at the same time.

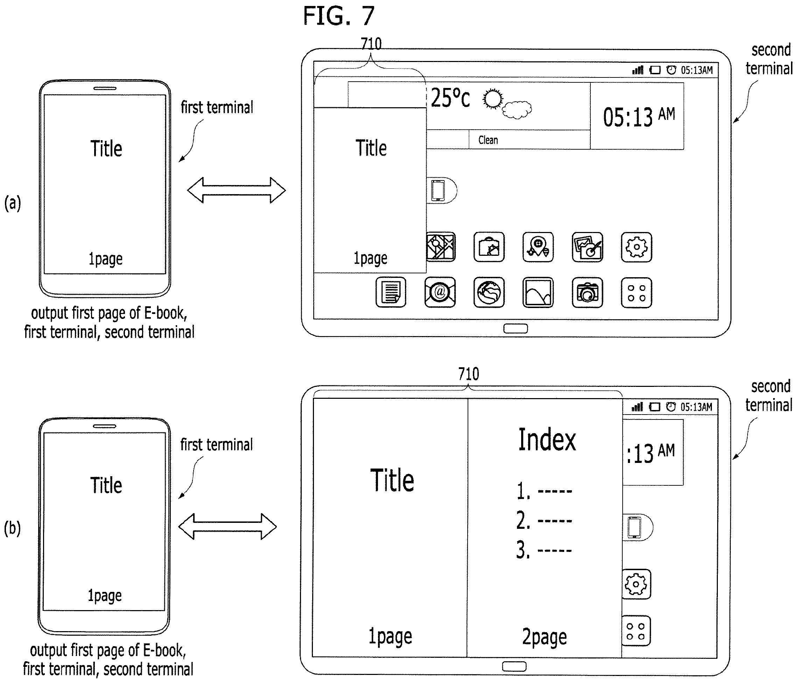

FIG. 7 is a diagram for an example of outputting a plurality of E-book pages. If an E-book application is executed in the first terminal, the second terminal can receive and output image data for a specific page currently outputted via the first display unit. If a size of the first area 710 becomes equal to or greater than a prescribed size, the second controller can further receive image data for a next page or a previous page of the specific page as well as the specific page currently outputted via the first display unit. Hence, a plurality of E-book pages can be outputted at the same time via the first area 710.

Referring to FIGS. 7 (a) and (b), if the size of the first area 710 increases while a first page of E-book contents is outputted, the first page and the second page of the E-book contents can be outputted at the same time.

FIGS. 5 to 7 illustrate examples that a plurality of pages of a home screen, a plurality of web pages, and a plurality of pages of E-book contents are outputted according to the increase of the size of the first area. Moreover, a plurality of pictures, a plurality of pages for writing a document, and the like can be outputted according to the increase of the size of the first area. In particular, the present embodiment can be applied to various contents.

If a prescribed list, which is capable of being checked by scrolling the list to the top/bottom or left/right, is outputted via the first terminal, the second terminal can control more items of the list to be outputted according to the increase of the size of the first area.

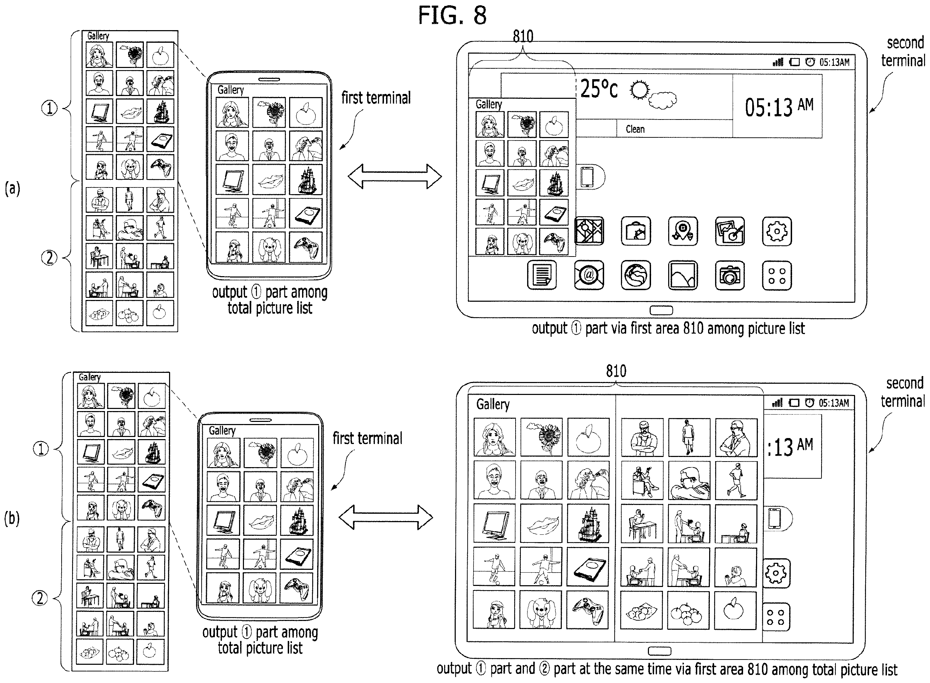

For example, FIG. 8 is a diagram for an example of outputting more items of a prescribed list according to the increase of a size of a first area. For clarity, assume a state that a picture list is outputted via the first terminal.

If it is unable to output all pictures on a single screen due to the too many captured pictures, the second controller displays a part of the pictures only. The second controller can control not displayed pictures to be outputted in response to a user input that scrolls the picture list to the top/bottom (or left/right).

In this case, if the size of the first area is equal to or less than a prescribed size, the second controller can receive and output image data for a picture list including only a part of total pictures currently outputted via the first display unit. If the size of the first area becomes equal to or greater than the prescribed size, the second controller can further receive a picture list including another part of the total pictures and may be able to output the list. Hence, as shown in the example of FIGS. 8 (a) and (b), it may be able to display more pictures via the second display unit.

In this case, a partial item (i.e., a part of pictures) can be overlapped with each other in the two picture list pages outputted via the second display unit.

Unlike the examples mentioned earlier in FIGS. 5 to 8, if a displacement of the pointer touching the first indicator is decreased in a prescribed direction, the second controller can control the size of the first area to be decreased.

FIGS. 4 to 8 show examples that an output of the first area for outputting image data received from the first terminal starts in response to a user input that drags the first indicator. Unlike the examples, the second controller can control the output of the first area to be started by a touch input touching (long touching) the first indicator or a pinch out input inputted by two pointers touching the first indicator (i.e., a user input that a distance between two pointers is gradually increasing).

In the foregoing description, it is explained as a size of the first area increases according to the increase of a displacement of a pointer touching the first indicator in a prescribed direction. Yet, the size of the first area can also be increased by a pinch out input inputted by two points on the first area, a drag input of a pointer touching the boundary of the first area, or the like.

Image data of the second terminal can be outputted via a remaining area (hereinafter, a second area) of the second display unit from which the first area is excluded. In particular, image data of the first terminal is outputted via the first area and image data of the second terminal can be outputted via the second area.

In this case, the first area can be outputted in a manner of overlaying the second area, or the first area and the second area may form a separate area which is not overlapped with each other.

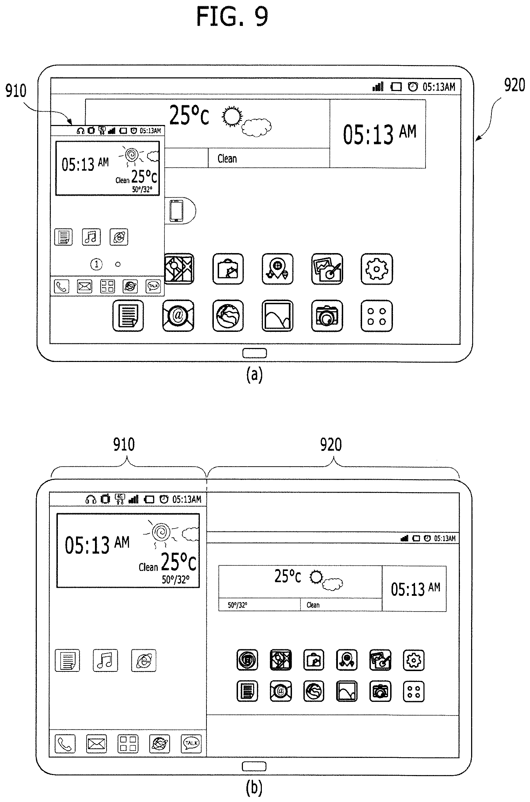

For example, FIG. 9 is a diagram for explaining arrangement of a first area and a second area. As shown in an example of FIG. 9 (a), the first area 910 can be displayed on the second area 920 in a manner of overlaying the second area. In this case, image data outputted via the second area 920 can be blocked by the first area 910. In order to minimize the blocking for the image data outputted via the second area 920, the first area 910 displayed on the second area 920 can be configured by a translucent state.

As shown in an example of FIG. 9 (b), the first area 910 and the second area 920 can be respectively positioned at a not-overlapped separate space. In this case, the image data outputted via the second area 920 is not blocked by the first area 910. Yet, as a size of the first area 910 is getting bigger, a size of the second area 920 decreases. Hence, a size of the image data outputted via the second area 920 can be gradually decreased.

The second controller can control a form of arrangement of the first area 910 and the second area 920 according to a size of the first area 910. For example, if the size of the first area 910 is less than a prescribed value, as shown in the example of FIG. 9 (a), the first area 910 can be outputted on the second area 920 in a manner of overlaying the second area. If the size of the first area 910 becomes equal to or greater than the prescribed value, as shown in the example of FIG. 9 (b), the second controller can control the first area 910 and the second area 920 to be arranged at a not-overlapped separate space.

As a different example, the second controller can control a form of arrangement of the first area and the second area according to orientation (horizontal/vertical) of the second terminal.

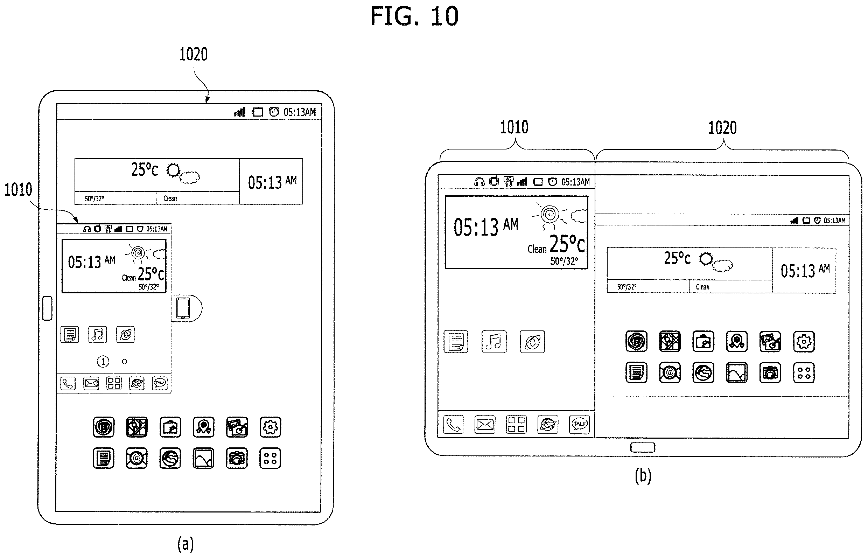

For example, FIG. 10 is a diagram for an example of differently arranging a first area and a second area according to an orientation of a second terminal. If the second terminal is placed in portrait orientation, as shown in an example of FIG. 10 (a), the second controller can control the first area 1010 to be displayed on the second area 1020 in a manner of overlying the second area. As a result, among image data outputted via the second area 1020, image data overlapped with the first area 1010 can be blocked by the first area 1010.

On the contrary, if the second terminal is placed in landscape orientation, as shown in an example of FIG. 10 (b), the second controller can control the first area 1010 and the second area 1020 to be arranged at a not-overlapped separate space. As a result, the image data outputted via the second area 1020 is not blocked anymore by the first area 1010.

The second controller can determine the orientation of the second terminal based on a signal sensed by a second sensing unit.

As a case opposite to the example of FIG. 10, when the second terminal is placed in landscape orientation, the first area can be displayed on the second area in a manner of overlaying the second area. When the second terminal is placed in portrait orientation, the first area and the second area can be arranged at a not-overlapped separate space.

If the second terminal rotates to make the second terminal to be placed in landscape orientation from portrait orientation or rotates to make the second terminal to be placed in portrait orientation from landscape orientation, the second controller can control a size of the first area to be changed to a predetermined size.

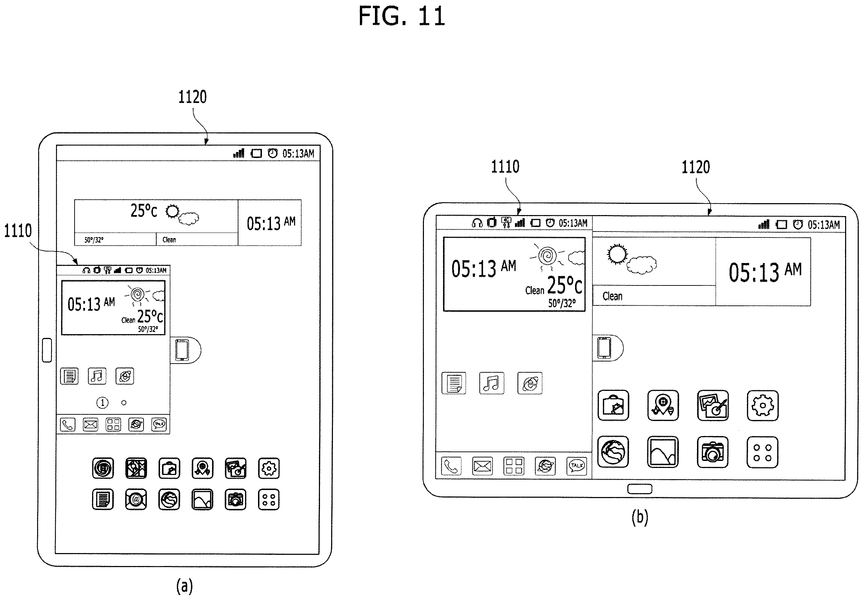

For example, FIG. 11 is a diagram for an example of controlling a size of a first area according to a change of an orientation of a second terminal. If the second terminal is placed in portrait orientation, as shown in an example of FIG. 11 (a), the second controller can determine a size of the first area 1110 based on a displacement of a pointer that drags a first indicator. If the second terminal rotates to make the second terminal to be placed in landscape orientation, the second controller can control the size of the first area 1110 to be changed to a predetermined size. For example, referring to FIG. 11 (b), if the second terminal rotates to make the second terminal to be placed in landscape orientation, the size of the first area 1110 is changed to a size capable of occupying the half of the second display unit.

As a case opposite to the example of FIG. 11, if the second terminal is placed in landscape orientation, the second controller can determine the size of the first area based on a displacement of a pointer that drags a first indicator. If the second terminal rotates to make the second terminal to be placed in portrait orientation, the second controller can control the size of the first area to be changed to a predetermined size.

The second controller can control a type of image data to be outputted via the first area to be controlled according to orientation of the second terminal. For example, if the second terminal is placed in portrait orientation (or, landscape orientation), the second controller can control an execution screen of a prescribed application installed in the first terminal to be outputted via the first area. Meanwhile, if the second terminal rotates to make the second terminal to be placed in landscape orientation (or, portrait orientation), the second controller can control a real time output screen of the first terminal to be outputted via the first area.

When the first area is displayed on the second area in a manner of overlaying the second area, if a size of the first area increases, a blocked size of image data outputted via the second area also increases. Hence, it is unable to properly watch the image data outputted via the second area. Although the first area and the second area are arranged at a not-overlapped separate space, as the size of the first area is getting bigger, the size of the second area decreases. As a result, it is difficult to watch the image data outputted via the second area. Hence, if the size of the first area becomes equal to or greater than a prescribed size, the second controller can control a second indicator to be outputted to stop displaying the first area.

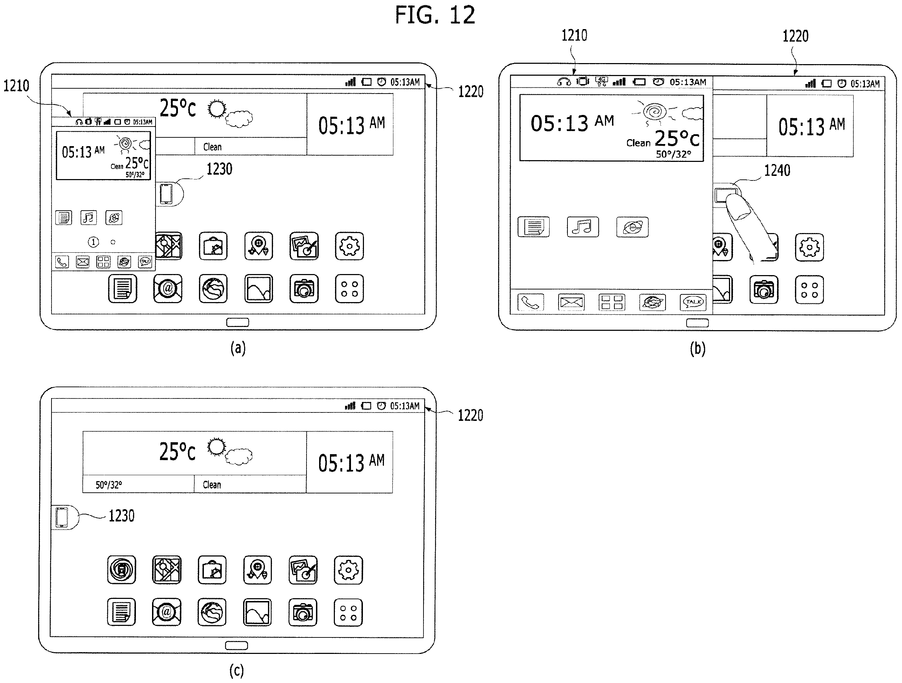

For example, FIG. 12 is a diagram for an example of outputting a second indicator. If a displacement of a pointer touching a first indicator 1230 increases in a prescribed direction, the second controller can control a size of a first area 1210 to be increased. In this case, if the size of the first area 1210 becomes equal to or greater than a prescribed value, the second controller can control a second indicator 1240 to be outputted to stop displaying the first area 1210. In this case, the second indicator 1240 may have a shape of an icon or a shape of an image object. For example, referring to FIGS. 12 (a) and (b), as the size of the first area 1210 is getting bigger, the first indicator 1230 is not displayed and the second indicator 1240 is outputted.

In this case, an image representing the second terminal can be outputted on the second indicator 1240. For example, FIG. 12 (b) shows an example of outputting an image indicating that the second terminal corresponds to a tablet on the second indicator 1240. If the image representing the second terminal is outputted on the second indicator 1240, a user can easily distinguish the first indicator 1230 from the second indicator 1240. As shown in FIG. 12 (b), identification information may have an image form or a text form.

As shown in the example of FIG. 12 (b), the second controller can control the second indicator 1240 to be outputted instead of the first indicator 1230 or control the first indicator 1230 and the second indicator 1240 to be outputted together.

If a user touches the second indicator 1240, the second controller can control the first area 1210 not to be displayed. As shown in the example of FIG. 12 (c), image data outputted via the second area 1220 can be outputted on the second display unit in a full screen. If the display of the first area 1210 is stopped, the first indicator 1230 can be outputted again. The first indicator 1230 can be outputted instead of the second indicator 1240 or can be outputted together with the second indicator 1240.

FIG. 12 illustrates an example that the second indicator is outputted only when the size of the first area is equal to or greater than a prescribed size. Unlikely, when wireless communication is established between the first terminal and the second terminal, if displaying of the first area starts by dragging the first indicator, the second controller can control the second indicator to be outputted.

The second controller can generate a control signal for remotely controlling the first terminal based on a touch input inputted on the first area and generate a control signal for controlling the second terminal based on a touch input inputted on the second area. For example, if a user touches an application icon on the first area, an application corresponding to the touched icon can be executed in the first terminal. If a user touches an application icon on the second area, an application corresponding to the touched icon can be executed in the second terminal. For example, if an icon of a message writing application is touched via the first area, the second controller may ask the first terminal to execute an application corresponding to the touched icon. Hence, a message writing screen can be outputted via the first area. Similarly, if an icon of a message writing application is touched via the second area, the second controller may be able to execute an application corresponding to the touched icon. Hence, a message writing screen can be outputted via the second area.

In addition, the second controller asks the first terminal to transmit a content list stored in the first terminal and may be able to output the received content list. Moreover, the second controller may be able to output a content list stored in the second terminal. In this case, contents can include all types of data capable of being handled by a terminal including an image, a video, a document, a memo, music, and the like.

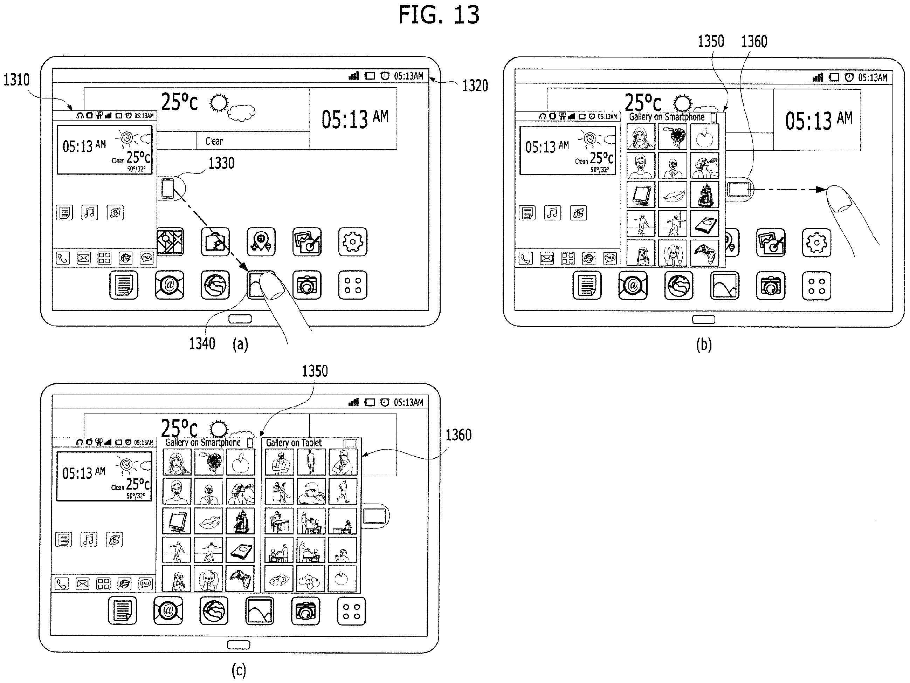

For example, FIG. 13 is a diagram for an example of outputting a content list. If a first indicator 1330 is dragged to a gallery icon 1340 which is outputted via a first area 1310 or a second area 1320, the second controller can ask the first terminal to provide an image list. Having received the image list from the first terminal, the second controller can output the received image list 1350. For example, referring to FIGS. 13 (a) and (b), if the first indicator 1330 is dragged to the gallery icon 1340 on the second area 1320, the image list 1350 of the first terminal can be outputted.

Hence, a real time output screen of the first terminal and the image list 1350 of the first terminal can be outputted on the second display unit at the same time.

The second controller can determine a type of content to be outputted according to an icon to which the first indicator 1330 is dragged. For example, as shown in the example of FIG. 13 (a), if the first indicator 1330 is dragged to an icon of a gallery application handling images, the second controller controls the image list 1350 to be outputted. On the contrary, if the first indicator 1330 is dragged to an icon of a voice recording application for voice recording, the second controller controls a voice recording file list to be outputted. If first indicator 1330 is dragged to an icon of a document writing application for handling documents, the second controller can control a document list to be outputted.

If the image list 1350 of the first terminal is outputted, the second controller can control a second indicator 1360 to be outputted. The second indicator 1360 can be outputted instead of the first indicator 1330 or can be outputted together with the first indicator 1330. If a prescribed touch input (e.g., a user input for touching the second indicator 1360 or dragging the second indicator 1360 in a prescribed direction) is inputted on the second indicator 1360 while the image list 1350 of the first terminal is outputted, as shown in the example of FIG. 13 (c), the second controller can control an image list 1360 of the second terminal to be additionally outputted.

When a message writing screen is outputted via the second area, if a file attach icon for selecting an attachment file to be attached to a message is dragged to the first indicator, the second controller can control a content list of the first terminal to be outputted.

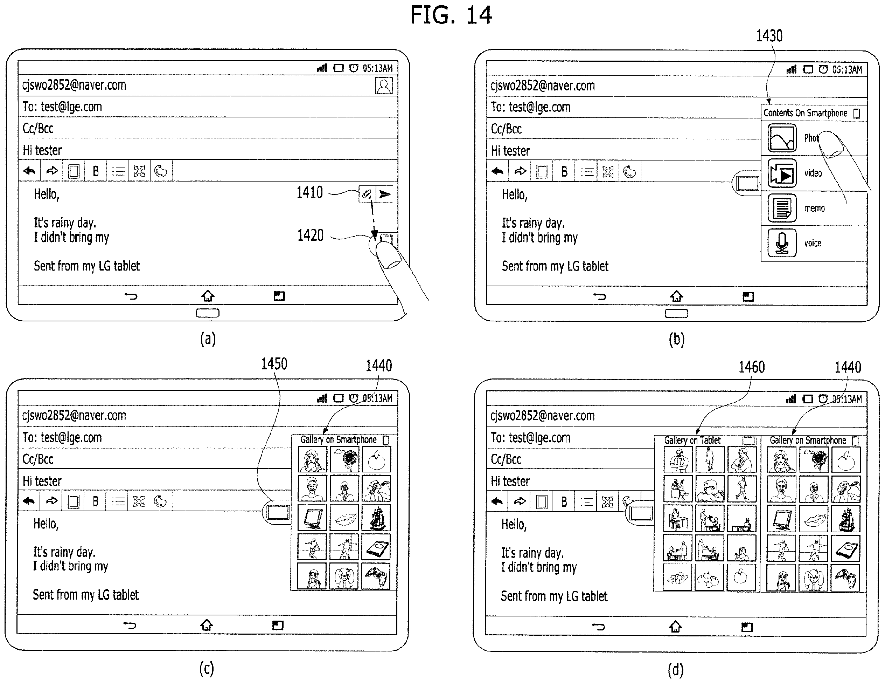

For example, FIG. 14 is a diagram for a different example of outputting a content list. As shown in the example of FIG. 14 (a), when a message writing screen is outputted via the second area, if a file attach icon 1410 for selecting an attachment file to be attached to a message is dragged to the first indicator 1420, the second controller can output a content list of the first terminal. In this case, the second controller can also output a menu 1430 for selecting a content type to be requested to the first terminal. Referring to the example shown in FIG. 14 (b), the menu 1430 capable of selecting a content type from among a picture, a video, a memo, and voice is outputted. If a type of the menu 1430 is touched, the second controller asks the first terminal to transmit a content list of the selected type and can output the received content list. For example, referring to FIG. 14 (b), if a picture item is selected from the menu 1430, as shown in the example of FIG. 14 (c), the second controller can control a picture list 1440 of the first terminal to be outputted.

If the picture list 1440 of the first terminal is outputted, the second controller can control a second indicator 1450 to be outputted. The second indicator 1450 can be outputted instead of the first indicator 1420 or can be outputted together with the first indicator 1420. If a prescribed touch input (e.g., a user input for touching the second indicator 1450 or dragging the second indicator 1450 in a prescribed direction) is inputted on the second indicator 1450 while the picture list 1440 of the first terminal is outputted, as shown in the example of FIG. 14 (d), the second controller can control a picture list 1460 of the second terminal to be additionally outputted.

Referring to FIGS. 13 and 14, if an additional user input is received after a content list of the first terminal is outputted, a content list of the second terminal is additionally outputted. Meanwhile, the second controller can control the content list of the first terminal and the content list of the second terminal to be outputted at the same time.

As a different example, if an application icon outputted via the first area is dragged to an application icon outputted via the second area or an application icon outputted via the second area is dragged to an application icon outputted via the first area, the second controller control the content list of the first terminal and the content list of the second terminal to be outputted at the same time.

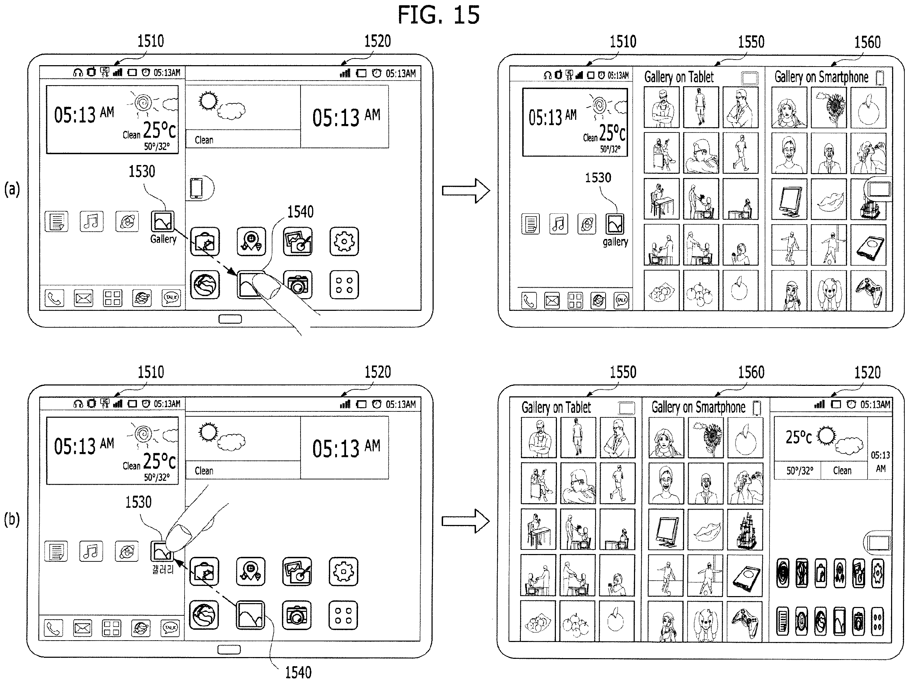

For example, FIG. 15 is a diagram for an example of outputting a content list of a first terminal and a content list of a second terminal at the same time. As shown in the example of FIG. 15 (a), if a gallery icon 1530 outputted via a first area 1510 is dragged to a gallery icon 1540 outputted via a second area 1520, the second controller can control an image list of the first terminal and an image list of the second terminal to be outputted. As shown in the example of FIG. 15 (b), if the gallery icon 1530 outputted via the second area 1520 is dragged to the gallery icon 1530 outputted via the first area 1510, the second controller can control the image list 1550 of the first terminal and the image list 1560 of the second terminal to be outputted.

Although FIGS. 15 (a) and (b) explain an example of the image list, as mentioned earlier in FIG. 13, a content type can be controlled according to a type of a selected icon. For example, if a voice recording icon on the first area 1510 is dragged to a gallery application on the second area 1520, the second terminal can output the image list of the first terminal and a voice recording list of the second terminal at the same time.

In this case, the second controller can control either image data outputted by the first terminal or image data outputted by the second terminal to be terminated according to whether the gallery icon 1530 displayed via the first area 1510 is dragged to the second area 1520 or the gallery icon 1540 displayed via the second area 1520 is dragged to the first area 1510.

For example, if the gallery icon 1530 outputted via the first area 1510 is dragged to the gallery icon 1540 outputted via the second area 1520, as shown in the example of FIG. 15 (a), the second controller continuously outputs the image data of the first terminal, stops outputting the image data of the second terminal, and can control the image list 1550 of the first terminal and the image list 1560 of the second terminal to be outputted.

On the contrary, if the gallery icon 1540 outputted via the second area 1520 is dragged to the gallery icon 1530 outputted via the first area 1510, as shown in the example of FIG. 15 (b), the second controller stops outputting the image data of the first terminal, continuously outputting the image data of the second terminal, and can control the image list 1550 of the first terminal and the image list 1560 of the second terminal to be outputted.

Although a drag input is inputted in a direction opposite to the direction shown in FIGS. 15 (a) and (b), the same embodiment can be applied. For example, if the gallery icon 1540 outputted via the second area 1520 is dragged to the gallery icon 1530 outputted via the first area 1510, the image data of the first terminal is continuously outputted and outputting the image data of the second terminal can be terminated.

In FIG. 15, a drag input is illustrated as a user input for outputting the content list of the first terminal and the content list of the second terminal at the same time. It is apparent that the content list of the first terminal and the content list of the second terminal are outputted at the same time by a touch input different from the input shown in FIG. 15. For example, if a touch input touching the gallery icon outputted via the second area is inputted in a state that the gallery icon outputted via the first area is touched, the second terminal can control the image list of the first terminal and the image list of the second terminal to be outputted at the same time.

The content list of the first terminal and the content list of the second terminal can include identification information for identifying the first terminal and identification information for identifying the second terminal, respectively. In this case, the identification information can include a text or an image for representing the first terminal or the second terminal.

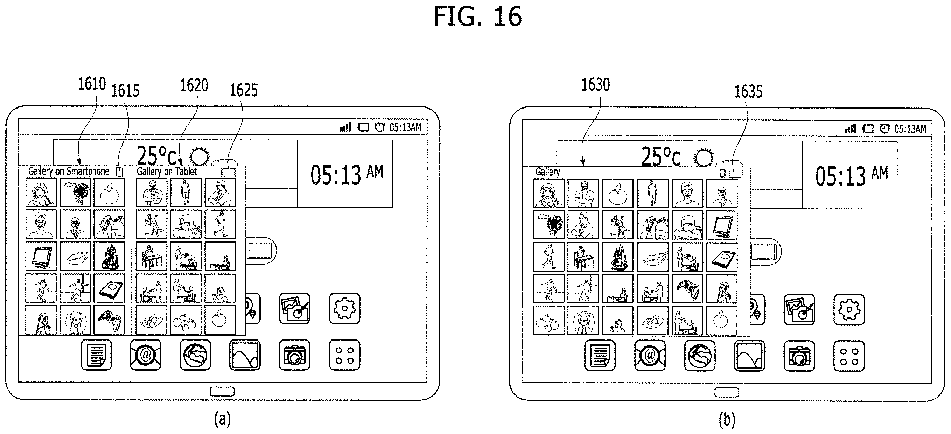

For example, FIG. 16 is a diagram for an example of outputting content lists including identification information on each terminal. Identification information 1615 for identifying the first terminal can be outputted in a content list 1610 of the first terminal and identification information 1625 for identifying the second terminal can be outputted in a content list 1620 of the second terminal. For example, referring to FIG. 16 (a), a smartphone image 1615 representing the first terminal is outputted in the content list 1610 of the first terminal and a tablet image 1625 representing the second terminal is outputted in the content list 1620 of the second terminal. A user can easily determine a device to which a corresponding image list belongs thereto by watching an image outputted via each of the content lists.

In this case, if one of the identification information 1615 of the first terminal and the identification information 1625 of the second terminal is dragged to another identification information, the second controller can configure a content list by merging the content list 1610 of the first terminal and the content list 1620 of the second terminal.

For example, if the smartphone image 1615 is dragged to the tablet image 1625 (or, if the tablet image 1625 is dragged to the smartphone image 1615), as shown in the example of FIG. 16 (b), the second controller can control a content list 1630, which is configured by merging the content list 1610 of the first terminal and the content list 1620 of the second terminal, to be outputted. The merged content list 1630 can output identification information 1635 to indicate that the content list of the first terminal and the content list of the second terminal are merged. FIG. 16 (b) illustrates an example of outputting an image that the smartphone image and the tablet image are merged.

If at least one of the content list of the first terminal and the content list of the second terminal is selected and the selected item is dragged to a specific icon of the second area, the second controller can control the selected item to be executed via an application corresponding to the selected icon.

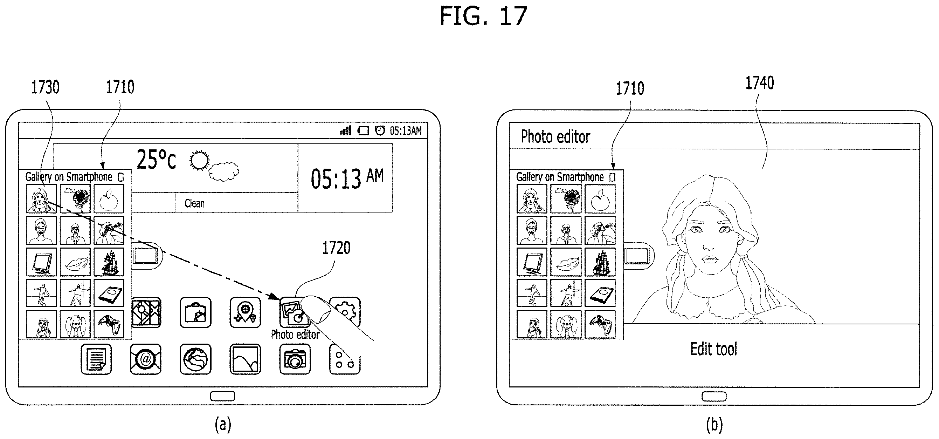

For example, FIG. 17 is a diagram for an example of executing an item of a content list through a specific application of a second terminal. For clarity, assume that an image list 1710 of the first terminal is outputted via the second display unit.

If an image is selected from the image list 1710 of the first terminal and the selected image is dragged to a specific icon on the second area, the second controller asks the first terminal to transmit the selected image. Having received the image, the second controller can control the received image to be executed in an application corresponding to the selected icon. For example, as shown in the example of FIG. 17 (a), if an image 1730 belonging to the image list 1710 is dragged to a photo editor icon 1720 on the second area, as shown in the example of FIG. 17 (b), the second controller can control an image 1740 corresponding to the selected image 1730 to be a target of picture editing while executing a picture editing application.

If at least one image belonging to the image list 1710 is selected and the selected image is dragged to a message application (e.g., E-mail, instant message, text message, etc.), the second controller can control a message writing screen to which an image corresponding to the selected image is attached to be outputted.

Although FIG. 17 explains an example of an image, it is apparent that the present embodiment is also applicable to a different type of content. For example, if a document file is dragged to a document editing application, it is able to open the document file while the document editing application is executed.

When at least one of the content list of the first terminal and the content list of the second terminal is outputted [S205], if at least one item of the content list is dragged to a message writing screen on the first area or the second area [S206], the second terminal can control content corresponding to the selected item to be attached to a message written via the first area or the second area [S207].regarding this, it shall be explained in detail with reference to drawings.

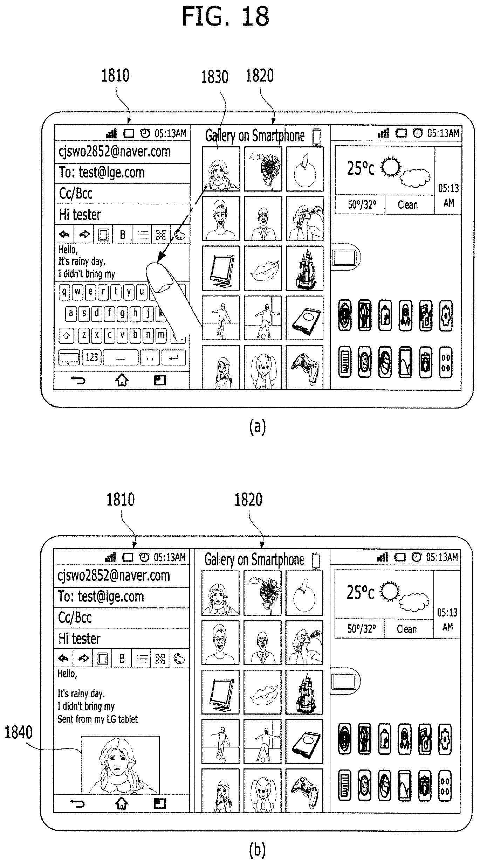

FIG. 18 is a diagram for an example of attaching contents to a message through a first area. When a message writing screen is outputted via the first area, if a first indicator is dragged to a specific icon (e.g., gallery icon) on the second area, as mentioned earlier in FIG. 13, it is able to output a content list of the first terminal. Moreover, it is able to additionally output a content list of the second terminal based on an additional input of a user.

When at least one of the content list of the first terminal and the content list of the second terminal is outputted, if at least one item is selected from the content list, the second controller can control the selected content to be attached to a message written via the first area.

For example, if a touch input (e.g., a user input for touching one item belonging to the content list or a user input for dragging one item belonging to the content list to the first area) for selecting at least one item from the content list of the first terminal is received while a message writing screen is outputted via the first area, the second controller can control content corresponding to the selected item to be attached to a message written via the first area.

For example, when an e-mail is written via the first area 1810, as shown in the example of FIG. 18 (a), if at least one item 1830 belonging to the image list 1820 of the first terminal is dragged to the top of the first area, as shown in the example of FIG. 18 (b), the second controller can control an image 1840 corresponding to the selected item to be attached to the e-mail written via the first area 1810.

Although it is not depicted, if at least one item selected from the image list of the second terminal is dragged to the top of the second area, the second controller can control the dragged item to be attached to an e-mail written via the first area. To this end, the second controller can transmit an image corresponding to the item selected by a user from the image list of the second terminal to the first terminal. Having received the image, the first terminal attaches the image to the message.

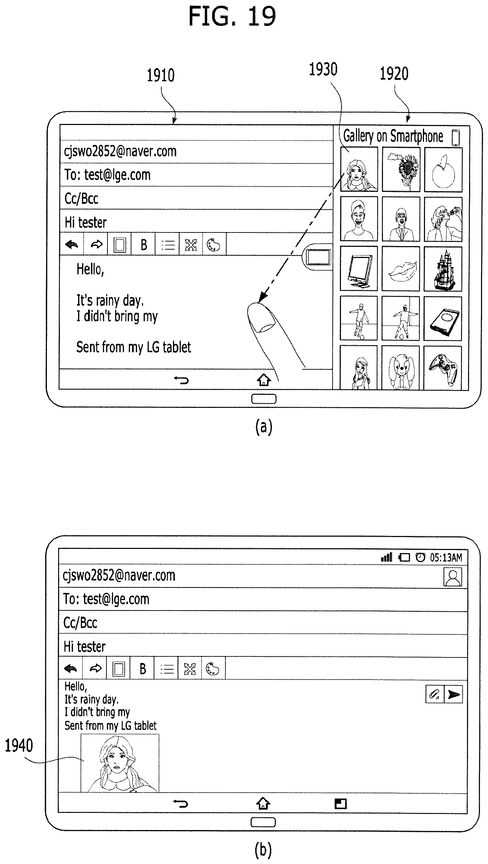

FIG. 19 is a diagram for an example of attaching contents to a message through a second area. If a file attach icon is dragged to a first indicator while a message writing screen is outputted via the second area, as mentioned earlier in FIG. 14, it is able to output the content list of the first terminal. Moreover, it is able to additionally output the content list of the second terminal by inputting an additional input of a user.

If at least one item belonging to the content list is completed while at least one of the content list of the first terminal and the content list of the second terminal is outputted, the second controller can control a selected content to be attached to a message written via the second area.

For example, if a touch input (e.g., a user input for touching one item belonging to the content list or a user input for dragging one item belonging to the content list to the second area) for selecting at least one item from the content list of the first terminal is received while a message writing screen is outputted via the second area, the second controller can control content corresponding to the selected item to be attached to a message written via the second area.

For example, when an e-mail is written via the second area 1910, as shown in the example of FIG. 19 (a), if at least one item 1930 belonging to the image list 1920 of the first terminal is dragged to the top of the second area 1920, as shown in the example of FIG. 19 (b), the second controller can control an image 1940 corresponding to the dragged item 1930 to be attached to the e-mail written via the second area 1910.

Although it is not depicted, if at least one item selected from the image list of the second terminal is dragged to the top of the second area, the second controller can control the dragged image to be attached to an e-mail written via the second area.

If an image of the image list is dragged to a photo edit icon, as mentioned earlier in FIG. 17, it is able to output an editing screen for editing the image. In this case, if a message writing screen is outputted via the first area or the second area, the second controller can control an edited image to be automatically attached to a message written via the first area or the second area.

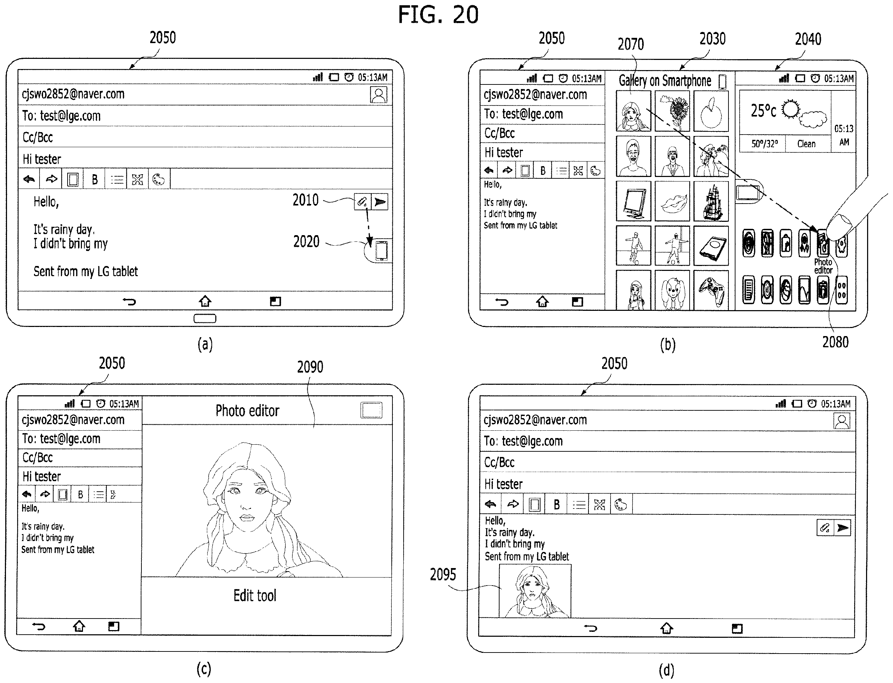

For example, FIG. 20 is a diagram for an example of attaching an edited image to a message via a first area or a second area.

When an image is written via the second area, if a file attach icon 2010 is dragged to the top of a first indicator 2020, the second controller can control a content list 2030 of the first terminal to be outputted. In this case, if the content list of the first terminal is outputted, the second controller can control a home screen of the second terminal or a list of applications installed in the second terminal to be additionally outputted while continuously outputting a message writing screen 2050. For example, referring to FIGS. 20 (a) and (b), if the content list 2030 of the first terminal is outputted, the home screen 2040 of the second terminal can be additionally outputted.

Subsequently, if at least one item 2070 belonging to the first content list 2030 is dragged to a photo edit icon 2080, the second controller executes a photo editing application and may be able to control an image 2090 corresponding to the selected item to be opened in the photo editing application. Hence, as shown in the example of FIG. 20 (c), an editing screen of the selected image can be outputted via the second display unit.

Subsequently, if the editing of the image is completed, the second controller can control the edited image 2095 to be attached to a message written via the second area.

Although it is not depicted, if an editing screen of a specific image is outputted while a message writing screen is outputted via the first area, the second controller can control an edited image to be attached to a message written via the first area.

In the foregoing examples, a message includes not only an e-mail, an instant message, a text message (e.g., SMS, LMS, and MMS), and the like written for the purpose of being transmitted to a different terminal but also all types of document media capable of being attached in a mobile terminal including SNS posting, a memo, a document, schedule, and the like.

If one of an icon displayed via the first area and an icon displayed via the second area is dragged to an icon of the same type displayed on a different area, the second controller can control a task currently performed in a prescribed application installed in one of the first terminal and the second terminal to be copied to a prescribed application installed in another terminal.

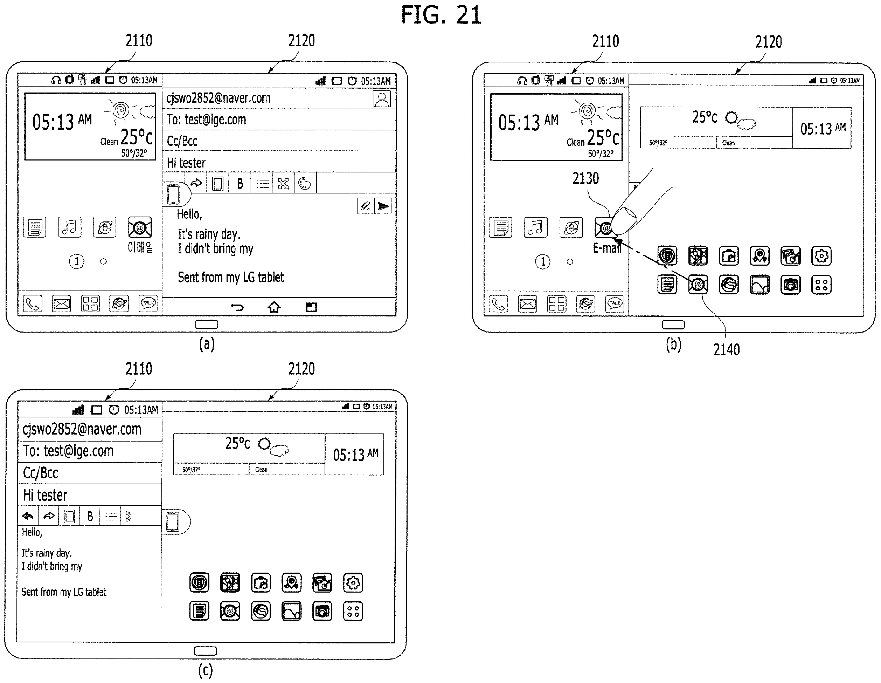

For example, FIG. 21 is a diagram for an example of copying a task currently performed in a terminal to another terminal.

As shown in the example of FIG. 21 (a), if a prescribed user input (e.g., a user input for pushing a home button) is received while an e-mail is written via a second area 2120, the second controller stops writing the e-mail and can control the home screen to be outputted via the second area 2120. In this case, as shown in the example of FIG. 21 (b), if an e-mail icon 2140 outputted via the second area 2120 is dragged to an e-mail icon 2130 of a first area 2110, the second controller can transmit e-mail content, which is used to be written via the second area 2120, to the first terminal.

Subsequently, if the e-mail icon 2130 outputted via the first area 2110 is touched, as shown in the example of FIG. 21 (c), an e-mail writing screen including content identical to the content, which is used to be written via the second area 2120, can be outputted via the first area 2110. Hence, a user can continuously write the e-mail, which used to be written in the second terminal, in the first terminal. Although wireless communication between the first terminal and the second terminal is terminated, the user can continuously write the e-mail in the first terminal.

Although it is not depicted, if a prescribed icon outputted via the first area 2110 is dragged to an icon of the same type outputted via the second area 2120, a task currently performed in the first terminal can be transmitted to the second terminal.

Although the e-mail is explained as an example in the drawing, the first and the second terminal can exchange a task of all types of data capable of being handled by a terminal.

FIG. 21 shows an example that a task of an application is copied only when icons of the same type outputted via the first area and the second area are mutually selected. Although an application icon is dragged to a first indicator (or, a second indicator), the second controller can control a task of a prescribed application to be copied.

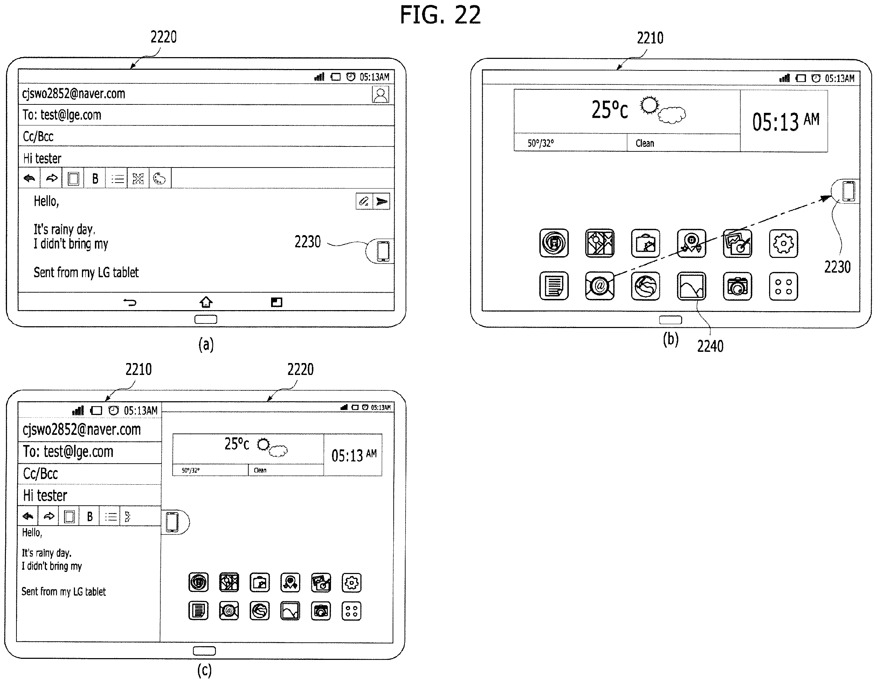

For example, FIG. 22 is a diagram for a different example of copying a task currently performed in a terminal to another terminal.

As shown in the example of FIG. 22 (a), if a prescribed user input (e.g., a user input for pushing a home button) is received while an e-mail is written via a second area 2220, the second controller stops writing the e-mail and can control the home screen to be outputted via the second area 2220. In this case, as shown in the example of FIG. 22 (b), if an e-mail icon 2240 outputted via the second area 2220 is dragged to the first indicator 2230, the second controller can transmit e-mail content, which is used to be written via the second area 2220, to the first terminal.

Subsequently, if the e-mail icon 2150 outputted via the first area 2210 is touched, as shown in the example of FIG. 22 (c), an e-mail writing screen including content identical to the content, which is used to be written via the second area 2220, can be outputted via the first area 2210.

Although it is not depicted, if an icon outputted via the first area is dragged to a first indicator (or, a second indicator), a task currently performed in the first terminal can be copied to the second terminal.

According to one embodiment of the present invention, the aforementioned method (operation flowchart) can be implemented with a code readable by a processor in a recording media in which a program (or, an application) is recorded. The examples of the recording media readable by the processor may include a ROM, a RAM, a CD-ROM, a magnetic tape, a floppy disc, an optical data storing device and the like. And, implementing in a form of a carrier wave (e.g., transmission via the internet and the like) is also included.

The mobile terminal 100 disclosed in the present specification are not restricted by the configuration and the method of the aforementioned embodiments. In order to make various modifications from the embodiments, all or a part of each embodiment can be configured in a manner of being selectively combined.

## Claims

1. A first mobile terminal performing wireless communication with a second mobile terminal, the first mobile terminal comprising:
a wireless communication unit (110) configured to perform the wireless communication;
a touch screen (151) configured to display information on a plurality of areas; and
a controller (180) configured to:
control the wireless communication unit (110) to receive first information from the second mobile terminal;
control the touch screen (151) to display the first information on a first area (1210) of the plurality of areas, wherein the first information includes image data currently outputted from the second mobile terminal and a first page of a plurality of pages of the image data is displayed on the first area (1210);
control the touch screen (151) to display second information of the first mobile terminal on a second area (1220) of the plurality of areas;
control the touch screen (151) to display, at a border of the first area (1210), a first indicator (1230) to indicate that the wireless communication is performed;
control the touch screen (151) to display a first image identifying the second mobile terminal on the first indicator; and
adjust a size of the first area (1210) in response to receiving a touch drag input for the first indicator (1230),
wherein the first information includes image data currently outputted from the second mobile terminal, and a first page of a plurality of pages of the image data is displayed on the first area (1210), and
wherein the controller is further configured to:
when the size of the first area (1210) increases to equal to or greater than a predetermined size, control the touch screen (151) to display, in the increased first area (1210), the first page and a second page of the plurality of pages of the image data together;
when the size of the first area (1210) increases to equal to or greater than a predetermined size, control the touch screen (151) to display, at the border of the first area (1210), a second indicator (1240) instead of the first indicator (1230);
control the touch screen (151) to display a second image identifying the first mobile terminal on the second indicator (1240); and
control the touch screen (151) to no longer display the first area (1210) and to display the second area (1220) as a full-screen display in response to receiving a touch input on the second indicator.

2. The first mobile terminal of claim 1, wherein the plurality of pages of the image data includes at least one of a plurality of pages of home screen, a plurality of pages of web pages, or a plurality of pages of E-book pages.

3. The first mobile terminal of any one of claims 1 or 2, wherein the controller is further configured to:
when the size of the first area (1210) is less than the predetermined size, control the first area (1210) to be displayed on the second area (1220) in a manner of overlaying the second area (1220); and
when the size of the first area (1210) increases to equal to or greater than the predetermined size, control the first area (1210) and the second area (1220) not to be overlaid with each other.

4. The first mobile terminal of any one of claims 1 or 2, further comprising a sensing unit (140) configured to sense an inclination of the first mobile terminal, wherein the controller is further configured to:
detect rotation of the first mobile terminal from a landscape orientation to a portrait orientation or from a portrait orientation to a landscape orientation;
when the first mobile terminal is rotated from the landscape orientation to the portrait orientation, control the first area to be displayed on the second area in a manner of overlaying the second area; and
when the first mobile terminal is rotated from the portrait orientation to the landscape orientation, control the first area (1210) and the second area (1220) not to be overlaid with each other.

5. The first mobile terminal of claim 1, wherein the controller is further configured to:
control the touch screen to display a first list including the first information on the first area (1210);
control the touch screen to display a second list including the second information on the second area (1220);
detect selection of information from at least the first list or the second list; and
attach the selected information to a message written via the first area (1210) or the second area (1220).

6. The first mobile terminal of claim 5, wherein the controller is further configured to:
detect selection and dragging of at least one item from the first list to the second area (1220);
control the wireless communication unit to receive information corresponding to the selected item from the second mobile terminal; and
attach the received information to a message written via the second area (1220).

7. The first mobile terminal of claim 5, wherein the controller is further configured to:
detect selection and dragging of at least one item from the second list to the first area (1210);
control the wireless communication unit to transmit information corresponding to the selected item to the second mobile terminal; and
attach the transmitted information to a message written via the first area (1210).

8. The first mobile terminal of claim 5, wherein the controller is further configured to:
detect selection and dragging of information from the first list or the second list to an icon corresponding to an application of the second area (1220); and
execute the corresponding application by using content corresponding to the selected information .

9. The first mobile terminal of claim 5, wherein the controller is further configured to:
detect dragging of either the first indicator to an object in the second area (1220) or dragging of the object in the second area (1220) to the first indicator;
control the touch screen to display the first list;
detect a touch input received while the first list is displayed; and
control the touch screen to display the second list in addition to the first list.

10. The first mobile terminal of claim 9, wherein the controller is further configured to control the touch screen to:
display first identification information related to the second mobile terminal via the first list; and
display second identification information related to the first mobile terminal via the second list.

11. The first mobile terminal of claim 1, wherein the controller is further configured to:
detect dragging of an icon of a same type between the first area (1210) and the second area (1220); and
control an application of the first mobile terminal corresponding to the icon to share a task with the second mobile terminal.

12. The first mobile terminal of claim 1, wherein the controller is further configured to:
detect dragging of an icon from either the first area (1210) or the second area (1220) to the first indicator; and
control an application of the first mobile terminal corresponding to the icon to share a task with the second mobile terminal.

13. A method of a first mobile terminal performing wireless communication with a second mobile terminal, the method comprising:
establishing, via a wireless communication unit (110) of the first mobile terminal, a wireless communication channel with the second mobile terminal;
receiving, via a wireless communication unit, first information from the second mobile terminal;
displaying the first information on a first area (1210) of the plurality of areas of a touch screen (151) of the first mobile terminal, wherein the first information includes image data currently outputted from the second mobile terminal and a first page of a plurality of pages of the image data is displayed on the first area (1210);
displaying second information of the first mobile terminal on a second area (1220) of the plurality of areas;
displaying, at a border of the first area (1210), a first indicator (1230) to indicate that the wireless communication is performed;
displaying a first image identifying the second mobile terminal on the first indicator (1230); and
adjusting a size of the first area (1210) in response to receiving a touch drag input for the first indicator (1230),
wherein the first information includes image data currently outputted from the second mobile terminal, and a first page of a plurality of pages of the image data is displayed on the first area (1210), and
wherein the method is further comprising the steps of:
when the size of the first area (1210) increases to equal to or greater than a predetermined size, displaying, in the increased first area (1210), the first page and a second page of the plurality of pages of the image data together;
when the size of the first area (1210) increases to equal to or greater than a predetermined size, displaying, at the border of the first area (1210), a second indicator (1240) instead of the first indicator (1230);
displaying a second image identifying the first mobile terminal on the second indicator (1240); and
no longer displaying the first area (1210) and displaying the second area (1220) as a full-screen display in response to receiving a touch input on the second indicator.

## Patentansprüche

1. Erstes mobiles Endgerät zur drahtlosen Kommunikation mit einem zweiten mobilen Endgerät, wobei das erste mobile Endgerät aufweist:
eine Drahtloskommunikationseinheit (110), die zur drahtlosen Kommunikation ausgebildet ist,
einen Touchscreen (151), der zur Anzeige von Informationen in mehreren Bereichen ausgebildet ist, und
ein Steuergerät (180), das ausgebildet ist zum
Steuern der Drahtloskommunikationseinheit (110), um vom zweiten mobilen Endgerät erste Informationen zu empfangen,
Steuern des Touchscreens (151), um die ersten Informationen in einem ersten Bereich (1210) der mehreren Bereiche darzustellen, wobei die ersten Informationen aktuell vom zweiten mobilen Endgerät ausgegebene Bilddaten aufweisen und eine erste Seite von mehreren Seiten der Bilddaten im ersten Bereich (1210) dargestellt werden,
Steuern des Touchscreens (151), um zweite Informationen des ersten mobilen Endgeräts in einem zweiten Bereich (1220) der mehreren Bereiche darzustellen,
Steuern des Touchscreens (151), um an einem Rand des ersten Bereichs (1210) eine erste Anzeige (1230) darzustellen, um anzuzeigen, dass die drahtlose Kommunikation stattfindet,
Steuern des Touchscreens (151), um ein erstes Bild, welches das zweite mobile Endgerät identifiziert, auf der ersten Anzeige darzustellen, und
Einstellen der Größe des ersten Bereichs (1210) bei Empfang einer Zieheingabe für die erste Anzeige (1230),
wobei die ersten Informationen aktuell vom zweiten mobilen Endgerät ausgegebene Bilddaten aufweisen und eine erste Seite von mehreren Seiten von Bilddaten im ersten Bereich (1210) dargestellt werden und
wobei das Steuergerät ferner ausgebildet ist, um
wenn der erste Bereich (1210) sich auf eine Größe gleich einer oder größer als eine bestimmte Größe vergrößert, den Touchscreen (151) zu steuern, um im vergrößerten ersten Bereich (1210) die erste Seite und eine zweite Seite der mehreren Seiten der Bilddaten zusammen darzustellen,
wenn der erste Bereich (1210) sich auf eine Größe gleich einer oder größer als eine bestimmte Größe vergrößert, den Touchscreen (151) zu steuern, um am Rand des ersten Bereichs (1210) eine zweite Anzeige (1240) anstelle der ersten Anzeige (1230) darzustellen,
den Touchscreen (151) zu steuern, um ein zweites Bild, welches das erste mobile Endgerät identifiziert, auf der zweiten Anzeige (1240) darzustellen, und
den Touchscreen (151) zu steuern, um den ersten Bereich (1210) nicht länger darzustellen und auf eine Berührungseingabe auf der zweiten Anzeige hin einen zweiten Bereich (1220) als Vollbildanzeige darzustellen.

2. Erstes mobiles Endgerät nach Anspruch 1, wobei die mehreren Seiten der Bilddaten eine oder mehrere Seiten eines Heimbildschirms, von Webseiten oder E-Book-Seiten aufweisen.

3. Erstes mobiles Endgerät nach Anspruch 1 oder 2, wobei das Steuergerät ferner ausgebildet ist um
wenn die Größe des ersten Bereichs (1210) kleiner als die bestimmte Größe ist, den ersten Bereich (1210) so zu steuern, dass er im zweiten Bereich (1220) in einer den zweiten Bereich (1220) überlagernden Weise dargestellt wird, und
wenn der erste Bereich (1210) sich auf eine Größe vergrößert, die gleich oder größer als die bestimmte Größe ist, den ersten Bereich (1210) und den zweiten Bereich (1220) so zu steuern, dass sie sich nicht überlagern.

4. Erstes mobiles Endgerät nach Anspruch 1 oder 2, welches ferner ein Detektorelement (140) aufweist, das ausgebildet ist, um einen Neigungswinkel des ersten mobilen Endgeräts zu detektieren,
wobei das Steuergerät ferner ausgebildet ist zum
Erfassen einer Drehbewegung des ersten mobilen Endgeräts von einer Landschaftsausrichtung zu einer Portraitausrichtung oder von einer Portraitausrichtung zu einer Landschaftsausrichtung,
wenn das erste mobile Endgerät von der Landschaftsausrichtung zur Portraitausrichtung gedreht wird, Steuern des ersten Bereichs derart, dass er auf dem zweiten Bereich in einer den zweiten Bereich überlagernden Weise angezeigt wird, und
wenn das erste mobile Endgerät von der Portraitausrichtung zur Landschaftsausrichtung gedreht wird, Steuern des ersten Bereichs (1210) und des zweiten Bereichs (1220) derart, dass sie sich nicht überlagern.

5. Erstes mobiles Endgerät nach Anspruch 1, wobei das Steuergerät ferner ausgebildet ist, zum
Steuern des Touchscreens, um im ersten Bereich (1210) eine erste Liste mit den ersten Informationen darzustellen,
Steuern des Touchscreens, um in einem zweiten Bereich (1220) eine zweite Liste mit den zweiten Informationen darzustellen,
Erfassen einer Auswahl von Informationen aus der ersten und/oder der zweiten Liste, und
Anhängen der ausgewählten Informationen an eine über den ersten Bereich (1210) oder den zweiten Bereich (1220) erstellte Nachricht.

6. Erstes mobiles Endgerät nach Anspruch 5, wobei das Steuergerät ferner ausgebildet ist zum
Erfassen, dass mindestens ein Objekt von der ersten Liste zum zweiten Bereich (1220) ausgewählt und gezogen wird,
Steuern der Drahtloskommunikationseinheit, um vom zweiten mobilen Endgerät Informationen zu empfangen, die dem ausgewählten Objekt entsprechen, und
Anhängen der empfangenen Informationen an eine über den zweiten Bereich (1220) erstellte Nachricht.

7. Erstes mobiles Endgerät nach Anspruch 5, wobei das Steuergerät ferner ausgebildet ist zum
Erfassen, dass mindestens ein Objekt von der zweiten Liste zum ersten Bereich (1210) ausgewählt und gezogen wird,
Steuern der Drahtloskommunikationseinheit, um Informationen, die dem ausgewählten Objekt entsprechen, an das zweite mobile Endgerät zu senden, und
Anhängen der gesendeten Informationen an eine über den ersten Bereich (1210) erstellte Nachricht.

8. Erstes mobiles Endgerät nach Anspruch 5, wobei das Steuergerät ferner ausgebildet ist zum
Erfassen, dass Informationen aus der ersten oder der zweiten Liste zu einem Piktogramm, welches einer Anwendung des zweiten Bereichs (1220) entspricht, ausgewählt und gezogen werden, und
Ausführen der entsprechenden Anwendung durch Nutzen des den ausgewählten Informationen entsprechenden Inhalts.

9. Erstes mobiles Endgerät nach Anspruch 5, wobei das Steuergerät ferner ausgebildet ist zum
Erfassen, dass entweder die erste Anzeige zu einem Objekt im zweiten Bereich (1220) oder das Objekt im zweiten Bereich (1220) zur ersten Anzeige gezogen wird,
Steuern des Touchscreens, um die erste Liste anzuzeigen,
Erfassen einer Berührungseingabe, die während der Anzeige der ersten Liste empfangen wird, und
Steuern des Touchscreens, um die zweite Liste zusätzlich zur ersten Liste anzuzeigen.

10. Erstes mobiles Endgerät nach Anspruch 9, wobei das Steuergerät ferner ausgebildet ist zum Steuern des Touchscreens zum
Darstellen erster zum zweiten mobilen Endgerät gehöriger Identifikationsinformationen mit Hilfe der ersten Liste und
Darstellen zweiter zum ersten mobilen Endgerät gehöriger Identifikationsinformationen mit Hilfe der zweiten Liste.

11. Erstes mobiles Endgerät nach Anspruch 1, wobei das Steuergerät ferner ausgebildet ist zum
Erfassen, dass ein Piktogramm desselben Typs zwischen den ersten Bereich (1210) und den zweiten Bereich (1220) gezogen wird, und
Steuern einer Anwendung des ersten mobilen Endgeräts, die dem Piktogramm entspricht, zum Teilen einer Aufgabe mit dem zweiten mobilen Endgerät.

12. Erstes mobiles Endgerät nach Anspruch 1, wobei das Steuergerät ferner ausgebildet ist zum
Erfassen, dass ein Piktogramm entweder vom ersten Bereich (1210) oder vom zweiten Bereich (1220) zur ersten Anzeige gezogen wird, und
Steuern einer Anwendung des ersten mobilen Endgeräts, die dem Piktogramm entspricht, zum Teilen einer Aufgabe mit dem zweiten mobilen Endgerät.

13. Verfahren eines ersten mobilen Endgeräts zur drahtlosen Kommunikation mit einem zweiten mobilen Endgerät, wobei das Verfahren die folgenden Schritte aufweist:
Einrichten, über eine Drahtloskommunikationseinheit (110) des ersten mobilen Endgeräts, eines Kanals zur drahtlosen Kommunikation mit dem zweiten mobilen Endgerät,
Empfangen, über eine Drahtloskommunikationseinheit, von ersten Informationen vom zweiten mobilen Endgerät,
Darstellen der ersten Informationen in einem ersten Bereich (1210) der mehreren Bereiche eines Touchscreens (151) des ersten mobilen Endgeräts, wobei die ersten Informationen aktuell vom zweiten mobilen Endgerät ausgegebene Bilddaten aufweisen und eine erste Seite von mehreren Seiten der Bilddaten im ersten Bereich (1210) dargestellt wird,
Darstellen zweiter Informationen des ersten mobilen Endgeräts in einem zweiten Bereich (1220) der mehreren Bereiche,
Darstellen einer ersten Anzeige (1230) an einem Rand des ersten Bereichs (1210), um daraufhinzuweisen, dass die drahtlose Kommunikation stattfindet,
Darstellen eines ersten Bildes, welches das zweite mobile Endgerät identifiziert, auf der ersten Anzeige (1230) und
Einstellen der Größe des ersten Bereichs (1210) bei Empfang einer Zieheingabe für die erste Anzeige (1230),
wobei die ersten Informationen aktuell vom zweiten mobilen Endgerät ausgegebene Bilddaten aufweisen und eine erste Seite von mehreren Seiten von Bilddaten im ersten Bereich (1210) dargestellt wird, und
wobei das Verfahren ferner die folgenden Schritte aufweist:
wenn der erste Bereich (1210) sich auf eine Größe gleich einer oder größer als eine bestimmte Größe vergrößert, gemeinsames Darstellen der ersten Seite und einer zweiten Seite im vergrößerten ersten Bereich (1210),
wenn der erste Bereich (1210) sich auf eine Größe gleich einer oder größer als eine bestimmte Größe vergrößert, Darstellen einer zweiten Anzeige (1240) anstelle der ersten Anzeige (1230) am Rand des ersten Bereichs (1210),
Darstellen eines zweiten Bildes, welches das erste mobile Endgerät identifiziert, auf der zweiten Anzeige (1240), und
Abbruch des Darstellens des ersten Bereichs (1210) und, auf eine Berührungseingabe auf der zweiten Anzeige hin, Darstellen eines zweiten Bereichs (1220) als Vollbildanzeige.

## Revendications

1. Premier terminal mobile effectuant une communication sans fil avec un second terminal mobile, le premier terminal mobile comprenant :
une unité de communication sans fil (110) configurée pour effectuer la communication sans fil ;
un écran tactile (151) configuré pour afficher des informations sur une pluralité de zones ; et
un dispositif de commande (180) configuré pour :
commander l'unité de communication sans fil (110) pour recevoir des premières informations en provenance du second terminal mobile ;
commander l'écran tactile (151) pour afficher les premières informations sur une première zone (1210) de la pluralité de zones, les premières informations incluent des données d'image actuellement délivrées depuis le second terminal mobile et une première page d'une pluralité de pages des données d'image est affichée sur la première zone (1210) ;
commander l'écran tactile (151) pour afficher des secondes informations du premier terminal mobile sur une seconde zone (1220) de la pluralité de zones ;
commander l'écran tactile (151) pour afficher, au niveau d'une bordure de la première zone (1210), un premier indicateur (1230) pour indiquer que la communication sans fil est effectuée ;
commander l'écran tactile (151) pour afficher une première image identifiant le second terminal mobile sur le premier indicateur ; et
ajuster une taille de la première zone (1210) en réponse à la réception d'une entrée de glissé tactile pour le premier indicateur (1230),
dans lequel les premières informations incluent des données d'image actuellement délivrées depuis le second terminal mobile, et une première page d'une pluralité de pages des données d'image est affichée sur la première zone (1210), et
dans lequel le dispositif de commande est en outre configuré pour :
lorsque la taille de la première zone (1210) augmente jusqu'à une taille supérieure ou égale à une taille prédéterminée, commander l'écran tactile (151) pour afficher, dans la première zone (1210) augmentée, la première page et une seconde page de la pluralité de pages des données d'image ensemble ;
lorsque la taille de la première zone (1210) augmente jusqu'à une taille supérieure ou égale à une taille prédéterminée, commander l'écran tactile (151) pour afficher, à la bordure de la première zone (1210), un second indicateur (1240) au lieu du premier indicateur (1230) ;
commander l'écran tactile (151) pour afficher une seconde image identifiant le premier terminal mobile sur le second indicateur (1240) ; et
commander l'écran tactile (151) pour ne plus afficher la première zone (1210) et pour afficher la seconde zone (1220) comme un affichage plein écran en réponse à la réception d'une entrée tactile sur le second indicateur.

2. Premier terminal mobile selon la revendication 1, dans lequel la pluralité de pages des données d'image inclut au moins l'une parmi une pluralité de pages d'écran d'accueil, une pluralité de pages de pages Web, ou une pluralité de pages de pages de livre électronique.

3. Premier terminal mobile selon la revendication 1 ou 2, dans lequel le dispositif de commande est en outre configuré pour :
lorsque la taille de la première zone (1210) est inférieure à la taille prédéterminée, commander la première zone (1210) pour qu'elle s'affiche sur la seconde zone (1220) de manière à chevaucher la seconde zone (1220) ; et
lorsque la taille de la première zone (1210) augmente jusqu'à une taille supérieure ou égale à la taille prédéterminée, commander la première zone (1210) et la seconde zone (1220) pour qu'elles ne se chevauchent pas.

4. Premier terminal mobile selon la revendication 1 ou 2, comprenant en outre une unité de capteur (140) configurée pour détecter une inclinaison du premier terminal mobile, dans lequel le dispositif de commande est en outre configuré pour :
détecter une rotation du premier terminal mobile à partir d'une orientation en paysage vers une orientation en portrait ou à partir d'une orientation en portrait vers une orientation en paysage ;
lorsque le premier terminal mobile est tourné à partir de l'orientation en paysage vers l'orientation en portrait, commander la première zone pour qu'elle s'affiche sur la seconde zone de manière à chevaucher la seconde zone ; et
lorsque le premier terminal mobile est tourné à partir de l'orientation en portrait vers l'orientation en paysage, commander la première zone (1210) et la seconde zone (1220) pour qu'elles ne se chevauchent pas.

5. Premier terminal mobile selon la revendication 1, dans lequel le dispositif de commande est en outre configuré pour :
commander l'écran tactile pour afficher une première liste incluant les premières informations sur la première zone (1210) ;
commander l'écran tactile pour afficher une seconde liste incluant les secondes informations sur la seconde zone (1220) ;
détecter une sélection d'informations d'au moins la première liste ou la seconde liste ; et
joindre les informations sélectionnées à un message écrit via la première zone (1210) ou la seconde zone (1220).

6. Premier terminal mobile selon la revendication 5, dans lequel le dispositif de commande est en outre configuré pour :
détecter une sélection et un glissement d'au moins un article de la première liste vers la seconde zone (1220) ;
commander l'unité de communication sans fil pour recevoir des informations correspondant à l'article sélectionné en provenance du second terminal mobile ; et
joindre les informations reçues à un message écrit via la seconde zone (1220).

7. Premier terminal mobile selon la revendication 5, dans lequel le dispositif de commande est en outre configuré pour :
détecter une sélection et un glissement d'au moins un article de la seconde liste vers la première zone (1210) ;
commander l'unité de communication sans fil pour transmettre des informations correspondant à l'article sélectionné au second terminal mobile; et
joindre les informations transmises à un message écrit via la première zone (1210).

8. Premier terminal mobile selon la revendication 5, dans lequel le dispositif de commande est en outre configuré pour :
détecter une sélection et un glissement d'informations de la première liste ou de la seconde liste vers une icône correspondant à une application de la seconde zone (1220) ; et
exécuter l'application correspondante en utilisant un contenu correspondant aux informations sélectionnées.

9. Premier terminal mobile selon la revendication 5, dans lequel le dispositif de commande est en outre configuré pour :
détecter soit un glissement du premier indicateur vers un objet dans la seconde zone (1220) soit un glissement de l'objet dans la seconde zone (1220) vers le premier indicateur ;
commander l'écran tactile pour afficher la première liste ;
détecter une entrée tactile reçue pendant que la première liste est affichée ; et
commander l'écran tactile pour afficher la seconde liste en plus de la première liste.

10. Premier terminal mobile selon la revendication 9, dans lequel le dispositif de commande est en outre configuré pour commander l'écran tactile pour :
afficher des premières informations d'identification concernant le second terminal mobile via la première liste ; et
afficher des secondes informations d'identification concernant le premier terminal mobile via la seconde liste.

11. Premier terminal mobile selon la revendication 1, dans lequel le dispositif de commande est en outre configuré pour :
détecter un glissement d'une icône d'un même type entre la première zone (1210) et la seconde zone (1220) ; et
commander une application du premier terminal mobile correspondant à l'icône pour partager une tâche avec le second terminal mobile.

12. Premier terminal mobile selon la revendication 1, dans lequel le dispositif de commande est en outre configuré pour :
détecter un glissement d'une icône soit de la première zone (1210) soit de la seconde zone (1220) vers le premier indicateur ; et
commander une application du premier terminal mobile correspondant à l'icône pour partager une tâche avec le second terminal mobile.

13. Procédé d'un premier terminal mobile effectuant une communication sans fil avec un second terminal mobile, le procédé comprenant :
l'établissement, via une unité de communication sans fil (110) du premier terminal mobile, d'un canal de communication sans fil avec le second terminal mobile ;
la réception, via une unité de communication sans fil, de premières informations en provenance du second terminal mobile ;
l'affichage des premières informations sur une première zone (1210) de la pluralité de zones d'un écran tactile (151) du premier terminal mobile, les premières informations incluent des données d'image actuellement délivrées depuis le second terminal mobile et une première page d'une pluralité de pages des données d'image est affichée sur la première zone (1210) ;
l'affichage de secondes informations du premier terminal mobile sur une seconde zone (1220) de la pluralité de zones ;
l'affichage, au niveau d'une bordure de la première zone (1210), d'un premier indicateur (1230) pour indiquer que la communication sans fil est effectuée ;
l'affichage d'une première image identifiant le second terminal mobile sur le premier indicateur (1230) ; et
l'ajustement d'une taille de la première zone (1210) en réponse à la réception d'une entrée de glissé tactile pour le premier indicateur (1230),
dans lequel les premières informations incluent des données d'image actuellement délivrées depuis le second terminal mobile, et une première page d'une pluralité de pages des données d'image est affichée sur la première zone (1210), et
dans lequel le procédé comprend en outre les étapes :
lorsque la taille de la première zone (1210) augmente jusqu'à une taille supérieure ou égale à une taille prédéterminée, d'affichage, dans la première zone (1210) augmentée, de la première page et d'une seconde page de la pluralité de pages des données d'image ensemble ;
lorsque la taille de la première zone (1210) augmente jusqu'à une taille supérieure ou égale à une taille prédéterminée, d'affichage, à la bordure de la première zone (1210), d'un second indicateur (1240) au lieu du premier indicateur (1230) ;
d'affichage d'une seconde image identifiant le premier terminal mobile sur le second indicateur (1240) ; et
d'arrêt de l'affichage de la première zone (1210) et l'affichage de la seconde zone (1220) comme un affichage plein écran en réponse à la réception d'une entrée tactile sur le second indicateur.
